(19) Europäisches Patentamt
European Patent Office
Office européen des brevets

(11) **EP 2 159 266 B1**

(12) **EUROPÄISCHE PATENTSCHRIFT**

(45) Veröffentlichungstag und Bekanntmachung des Hinweises auf die Patenterteilung:
**15.02.2012 Patentblatt 2012/07**

(51) Int Cl.:
*C09C 1/04* (2006.01)      *C09C 1/24* (2006.01)
*C09C 1/34* (2006.01)      *C09C 1/36* (2006.01)
*C09C 1/44* (2006.01)      *C09C 3/04* (2006.01)

(21) Anmeldenummer: **09168974.5**

(22) Anmeldetag: **28.08.2009**

(54) **Pigmentgranulate, die anorganische Filterhilfsmittel enthalten**

Pigment granulates containing inorganic filter aids

Granulés de pigments comprenant des auxiliaires filtrants anorganiques

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **01.09.2008 DE 102008045121**

(43) Veröffentlichungstag der Anmeldung:
**03.03.2010 Patentblatt 2010/09**

(73) Patentinhaber: **LANXESS Deutschland GmbH 51369 Leverkusen (DE)**

(72) Erfinder:
• **Friedrich, Holger**
  **Newcastle 2940 (ZA)**
• **Kunstmann, Herbert**
  **47802 Krefeld (DE)**
• **Chlopek, Krzysztof**
  **47800 Krefeld (DE)**
• **Kischekewitz, Jürgen**
  **40883 Ratingen (DE)**

(56) Entgegenhaltungen:
**WO-A-01/55264      WO-A-2008/012245**

## Beschreibung

Die vorliegende Erfindung betrifft Pigmentgranulate, die anorganische Filterhilfsmittel enthalten, sowie Verfahren zu deren Herstellung und ihre Verwendung zum Einfärben von kalk- und/oder zementgebundenen Baustoffen, Asphalt, Farben, Lacken, Papier oder Kunststoffen.

Die Verarbeitung von Pigmentgranulaten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und Kleben an Verpackungen, Maschinenteilen und Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen wie zum Beispiel Eisenoxidpigmenten ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen und organischen Medien ist deshalb das Ziel im Umgang mit Pigmenten. Dieses Ziel wird mehr oder weniger durch Anwendung von Granulationsverfahren auf Pigmente erreicht.

Grundsätzlich werden von Pigmentgranulaten, unabhängig davon, aus welchem Herstellungsverfahren sie stammen, vom Markt zwei sich in der Richtung gegensätzliche Eigenschaften gefordert: mechanische Stabilität des Granulats und gute Dispergiereigenschaften im eingesetzten Medium. Die mechanische Stabilität ist verantwortlich für gute Transporteigenschaften sowohl beim Transport zwischen Hersteller und Anwender als auch für gute Dosierung und Fließeigenschaften beim Einsatz der Pigmente. Sie wird durch hohe Haftkräfte bewirkt und hängt zum Beispiel von Bindemittelmenge und -art ab. Andererseits wird die Dispergierbarkeit durch eine gute Mahlung vor der Granulierung (Nass- und Trockenmahlung), durch die mechanische Energie bei der Einarbeitung in das jeweilige Anwendungsmedium (Scherkräfte) und durch Dispergierhilfsmittel, die die Haftkräfte im Granulat bei der Einarbeitung in ein Medium sofort herabsetzen, beeinflusst. Zur Erzielung des optimalen Farbeindrucks ist ein Zerteilen der Pigmentgranulate zu Primärteilchen erforderlich. Bei anorganischen Pigmenten ist die Anwendung von größeren Mengen Dispergierhilfsmittel wegen des Kostenverhältnisses Hilfsmittel/Pigment eingeschränkt. Außerdem bewirkt ein hoher Hilfsmittelanteil eine entsprechende Herabsetzung der Farbstärke beziehungsweise des Streuvermögens. Da die Farbstärkeschwankungen beispielsweise beim Einfärben von Baustoffen im allgemeinen unter $\pm 5$ % liegen, ist auch der Einsatz von Zusatzstoffen begrenzt, selbst wenn diese gleichzeitig als Haftvermittler und Dispergierhilfsmittel wirken. Auch dürfen die Zusätze nicht die Gebrauchseigenschaften der damit eingefärbten Endprodukte, wie zum Beispiel Baustoffe, Asphalt, Kunststoffe, Farben und Lacke nachteilig verändern, beispielsweise bei Beton die Druckfestigkeit oder das Erstarrungsverhalten, bei Asphalt die Druckfestigkeit oder Abriebfestigkeit und bei Kunststoffen die Festigkeit oder die Kerbschlagzähigkeit, bei Elastomeren (Polymeren) die elastischen Eigenschaften und bei Farben und Lacken die rheologischen Eigenschaften. Die wasserlöslichen Anteile sollten bei Pigmenten ganz allgemein und bei Pigmentgranulaten im Besonderen sehr niedrig sein, weil wasserlösliche Anteile in eigentlich allen Anwendungsmedien zu Problemen führen können.

Zum Einfärben von Baustoffen, wie beispielsweise Betonwaren, werden die Pigmente teilweise noch in pulverförmigem Zustand eingesetzt. Sie haben in gemahlener Form den Vorteil der guten Dispergierbarkeit. Die vollständige und homogene Verteilung solcher Pigmentpulver erfolgt im Betonmischer in einer kurzen Zeit - in der Regel innerhalb weniger Minuten. Der Nachteil dieser feinen Pulver besteht darin, dass sie kein gutes Fließverhalten aufweisen und sich beim Lagern häufig zusammenballen und verklumpen. Sie kleben an Verpackungen und Maschinenteilen, wodurch die genaue Dosierung bei der Verarbeitung erschwert wird. Ein weiterer Nachteil der Pulver besteht darin, dass sie zum Stauben neigen.

Die Staubvermeidung und verbesserte Dosierung bei der Anwendung von Pigmenten zur Einfärbung von Baustoffen ist ein vorrangiges Ziel. Seit Ende der 1980er-Jahre wird dieses Ziel mehr oder weniger durch Anwendung von Granulationsverfahren auf Pigmente erreicht. Solche Granulationsverfahren sind beispielsweise Aufbau- oder Sprühtrocknungs-Granulation.

Die Sprühtrocknungs-Granulation geht von Pigmentsuspensionen aus, denen Granulat-Bindemittel zugesetzt werden. Die Granulation nach dem Sprühtrocknungs-Verfahren erfolgt im Gleich- oder Gegenstrom über Ein- oder Zweistoffdüsen beziehungsweise über Zerstäubungstrockner, wobei Granulate mit einer mittleren Teilchengröße von 50 bis 500 $\mu$m erzeugt werden. Die entsprechenden Verfahren sind in zahlreichen Schutzrechten beschrieben und dem Fachmann bekannt. Bei diesen Verfahren werden überwiegend wasserlösliche Bindemittel verwendet. So wird beispielsweise in DE 3 619 363 A1 von organischen Substanzen wie Ligninsulfonaten, Formaldehydkondensaten, Gluconsäuren, sulfatierten Polyglykolethern ausgegangen. Die genannten Substanzen wirken in Betonmischungen als Verflüssiger. Sie beeinflussen das Wasser/Zement-Verhältnis und wirken sich auf die Betonkonsistenz aus.

Gemäß der Lehre von DE 41 19 667 A1 können auch anorganische Salze wie zum Beispiel Phosphat, Chlorid und Sulfat der Kationen der beiden ersten Hauptgruppen des Periodensystems eingesetzt werden. Die Menge der zugesetzten leicht löslichen Salze beträgt 0,05 bis 5 Gew.-% bezogen auf Pigment. Wie bereits oben erwähnt, sollten die wasserlöslichen Anteile auf einem Pigmentgranulat möglichst gering sein. Der explizite Zusatz eines leicht löslichen Salzes, welches dann nahezu vollständig in die wasserlöslichen Anteile eingeht, ist also unvorteilhaft. Der Zusatz von Chloriden ist außerdem nachteilig, wenn das Pigmentgranulat zum Einfärben von bewehrtem Beton verwendet werden soll, denn Chlorid-Ionen fördem die Korrosion.

Die Sprühgranulation erfordert wegen der Tropfenbildung die Verwendung von gut fließfähigen, also dünnflüssigen Suspensionen. Da für den Trocknungsvorgang eine größere Menge an Wasser zu verdampfen ist, ist das Verfahren energieaufwändig und vor allem dann vorteilhaft anzuwenden, wenn die zu granulierenden Pigmente bedingt durch den Pigmentherstellungsprozess in der Nassphase, beispielsweise in einer wässrigen Suspension oder Paste, vorliegen. Bei Pigmenten, die über einen trockenen Herstellungsprozess, beispielsweise einen Glühprozess, hergestellt wurden, bedeutet die Sprühgranulation einen zusätzlichen Verfahrensschritt, da das bereits in trockenem Zustand anfallende Pigment wieder in Wasser aufgeschlämmt und getrocknet werden muss.

Die Aufbaugranulation kann - ausgehend von Pigmentpulver - in Mischern unter hoher Turbulenz, im Wirbelschichtverfahren oder auch in Drehtellern (Pelletiertellern) oder Drehtrommeln (Pelletiertrommeln) durchgeführt werden. Allen diesen Verfahren ist gemeinsam, dass der Bindemittelbedarf, meistens Wasser, groß ist, so dass als zusätzlicher Verfahrensschritt eine Trocknung nachfolgen muss. Auch werden bei der Aufbaugranulation Granulate unterschiedlicher Größe erhalten, insbesondere, wenn nicht ausreichend Bindemittel für die Pulvermenge zur Verfügung steht oder die aktuelle Verteilung nicht optimal ist. Dann kann ein gewisser Anteil der Granulatteilchen zu groß werden, während andererseits auch noch zu kleine und damit noch staubende Anteile vorliegen. Deshalb ist eine Klassierung der entstehenden Granulate mit einem Rücklauf von Über- und Unterkorn erforderlich. Die Granulation in einem Drehteller (Pelletierteller) führt zu einem breiten Teilchengrößenspektrum. Wo dies wegen der schlechten Dispergierbarkeit zu großer Granulatteilchen nicht erwünscht ist, muss durch intensive personelle Überwachung der Granuliervorgang verfolgt werden und durch manuelle Steuerung der Keimmenge die Granulatherstellung optimiert werden. Üblicherweise erfolgt auch hierbei eine Klassierung mit Rückführung des Über- und Unterkorns.

Neben der Aufbau- und Sprühtrocknungs-Granulation sind im Stand der Technik auch andere Granulationsverfahren beschrieben. So wird beispielsweise in der EP 0 507 046 A1 eine Kombination von Sprüh- und Aufbaugranulation offenbart. In den letzten Jahren haben sich auch zunehmend Brikettier- und Pressgranulate zum Einfärben von Baustoffen auf dem Markt durchsetzen können. In der DE 196 38 042 A1 und der DE 196 49 756 A1 werden anorganische Pigmentgranulate aus Trockenpigmenten, zum Beispiel Fertiggut, durch Abmischung mit einem oder mehreren Hilfsmitteln, Kompaktierung und weiteren Folgeschritten wie Zerkleinern, Sieben und Rückführen von Grob- und/oder Feingut beschrieben. Die erhaltenen Granulate können mit einer zusätzlichen Schicht umhüllt werden, die zur Erhöhung der Stabilität beziehungsweise als Hilfe bei der Verarbeitung dient. Diese Granulate haben zwischenzeitlich großen kommerziellen Erfolg bei der Einfärbung von Baustoffen. Als Hilfsmittel können sowohl anorganische als auch organische Hilfsmittel eingesetzt werden. Die eingesetzten anorganischen Hilfsmittel sind im Wesentlichen wasserlösliche Salze, während als organische Hilfsmittel verschiedene Arten von Ölen in Betracht kommen. Alle diese Zusätze können mit Wasser mehr oder weniger schnell heruntergewaschen (extrahiert oder eluiert) werden. Dieser Zustand ist natürlich unerwünscht, weil das frei gesetzte Hilfsmittel entweder in die Umwelt oder in das jeweilige Anwendungsmedium gelangen kann, wo dann Schädigungen nicht ausgeschlossen werden können, insbesondere wenn Öle als Hilfsmittel eingesetzt werden.

In der DE 43 36 613 A1 werden anorganische Pigmentgranulate aus Trockenpigmenten, zum Beispiel Fertiggut, durch Abmischung mit Bindemitteln, Kompaktierung und weiteren Folgeschritten wie Schrotung auf einem Siebgranulator und einer anschließenden Aufbaugranulation auf einem Drehteller oder in einer Drehtrommel beschrieben. Die auf diese Weise hergestellten Pigmentgranulate sind zum Einfärben von Baustoffen wie Beton oder Asphalt geeignet. Bei diesem Verfahren werden als Bindemittel Wasser oder wässrige Lösungen eingesetzt. Auch können wasserunlösliche Bindemittel wie beispielsweise Öle verwendet werden.

In DE 43 36 612 A1 wird ein mehrstufiges Verfahren zur Herstellung von anorganischen Pigmentgranulaten aus Trockenpigmenten durch Zugabe von Ölen beschrieben. Die auf diese Weise hergestellten Pigmentgranulate sind zum Einfärben von Kunststoffen und zur Herstellung von Pulverlacken geeignet.

Anorganische Pigmentgranulate, die zum Einfärben von Kunststoffen oder Lacken sowie zur Herstellung von wässrigen Dispersionsfarben oder Abtönpasten geeignet sind, werden auch in der DE 197 04 943 A1 erwähnt. Sie beschreibt anorganische Pigmentgranulate, unter anderem zum Einfärben von Baustoffen, Lacken und Kunststoffen und zur Herstellung von wässrigen Dispersionsfarben, Abtönpasten und Slurries. Die Granulate enthalten ein oder mehrere wasserlösliche, hydrophile oder hydrophob/hydrophile, bei 25 °C flüssige Hilfsmittel oder bei 25 °C flüssige Mischungen von wasserlöslichen, hydrophilen oder hydrophob/hydrophilen Hilfsmitteln in einer Menge von 0,1 bis 10 Gew.-%. Zur Herstellung dieser Granulate werden verschiedene Herstellungsverfahren, unter anderem Aufbau- und Sprühtrocknungs-Granulation sowie ein Kompaktierverfahren, genannt. Nachteilig ist auch hier der Zusatz von wasserlöslichen Hilfsmitteln, die dann auf dem Granulat verbleiben und in die wasserlöslichen Anteile eingehen.

WO 2008/012245 A2 offenbart eine Pigmentzubereitung durch das Mischen einer festen Pigmentzubereitung (A) mit weiteren Hilfsmitteln/Additiven. Die Pigmentzubereitung (A) besteht aus anorganischen und/oder organischen Pigmenten, die mit Füllstoffen wie Silikaten (z.B. Kieselgur) versetzt werden. Die Pigmentzubereitung (A), die in granulierter Form mit einer mittleren Korngrösse von 100-1000 μm und einem Restwassergehalt von < 5 Gew.-% vorliegt, enthält den Füllstoff in einer Konzentration von bis zu 95 Gew.-%, wobei die Teilchengrössen zwischen 1 und 300μm liegen.

WO 01/55264 A2 offenbart Pigmentgranulate zur Einfärbung von u.a. Baustoffen, die unter Verwendung von anorganischen Pigmenten (z.B. Eisenoxide, Russpigmente), Bindemittel (z.B. Lingninsulfonat) und Dispergatoren für polare Systeme hergestellt werden. Als Dispergatoren werden u.a. Silikate oder Aluminate verwendet.

Die DE 100 03 248 A1 offenbart ein Pigmentgranulat zur Einfärbung von unpolaren Medien wie Asphalt, Bitumen, bitumösen Stoffen, Teer und Kunststoffen, die aus einer Mischung hergestellt werden, die Pigmente, mindestens ein die Einfärbung und die Verteilung des Pigmentes in unpolaren Medien förderndes Mittel und/oder mindestens einen Dispergator für polare Systeme sowie gegebenenfalls Lösungsmittel umfasst. Das die Einfärbung und die Verteilung des Pigments in unpolaren Medien fördernde Mittel soll vorzugsweise aus der Gruppe der Wachse ausgewählt werden. Dabei handelt es sich um Wachse natürlicher oder synthetischer Herkunft. Vorzugsweise werden synthetische Wachse wie Polyalkylenwachse, Polyethylenwachse, Polyethylenglykolwachse, Paraffin-Wachse, Styrol-Acrylat-Wachse, Polytetrafluorethylenwachse und dergleichen verwendet. Wie die DE 197 04 943 A1 beschreibt auch die DE 100 03 248 A1 mehrere Herstellungsverfahren für Granulate. Dabei handelt es sich aber nur um die bereits oben erwähnten Verfahren, wie zum Beispiel Press- und Brikettierverfahren, Granulation nach dem Sprühtrocknungs-verfahren, Wirbelschicht- oder Aufbau-Granulation. Prinzipiell sind die in der DE 100 03 248 A1 beschriebenen Wachse von ihrer chemischen Natur her bereits in anderen Schutzrechten erwähnt. Es handelt sich um organische Verbindungen, die hergestellten Granulate können nur zum Einfärben von unpolaren Medien eingesetzt werden.

Im älteren Stand der Technik sind also zahlreiche Pigmentgranulate beschrieben, die nach unterschiedlichen Verfahren hergestellt werden können. Es werden fast immer feste oder flüssige organische Hilfsmittel für die Granulation verwendet. Oftmals sind die organischen Hilfsmittel auch wasserlöslich. Aber auch dann, wenn anorganische Hilfsmittel zugesetzt werden, werden sie meist in Form von wässrigen Salzlösungen zugesetzt. Der Nachteil dieser Substanzen besteht darin, dass sie mit Wasser mehr oder weniger schnell heruntergewaschen (extrahiert oder eluiert) werden. Dieser Zustand ist natürlich unerwünscht, weil das extrahierte oder eluierte Hilfsmittel entweder in die Umwelt oder in das jeweilige Anwendungsmedium gelangen kann, wo dann Schädigungen nicht ausgeschlossen werden können. Organische Hilfsmittel stellen in rein anorganischen Systemen, wie beispielsweise Beton, Fremdstoffe dar, die die Eigenschaften negativ beeinflussen können, oder deren Auswirkungen nicht vorhergesagt werden können.

In DE 39 18 694 A1 werden Mikrogranulate zum Einfärben von Baustoffen offenbart, die aus einer wässrigen Suspension aus einem oder mehreren Pigmenten sowie Verbindungen des Bors, Aluminiums, Siliciums, Titans, Zink und/oder Zinns hergestellt werden. Vorzugsweise liegen die Verbindungen in Form von Oxiden und/oder Hydroxiden vor und sind Borate, Aluminate, Silikate, Titanate, Zinkate oder Stannate. Die Verbindungen können in Form ihrer Lösungen, als Kolloide oder auch als Suspensionen im gesamten Herstellungsprozess der Granulate, auch bereits bei der eigentlichen Pigmentbildung zugesetzt werden. In den offenbarten Beispielen werden allerdings meist wasserlösliche Verbindungen in Form ihrer Lösungen eingesetzt, wie beispielsweise Natronwasserglas oder Natriumaluminat oder es werden flüssige Verbindungen, wie Kieselsäuretetraethylester oder Tetraethylorthotitanat verwendet. Der Zusatz von Natronwasserglaslösung oder Natriumaluminat oder auch von Kieselsäuretetraethylester, welcher sich in wässriger Lösung bei dem beschriebenen Sprühtrocknungsverfahren zu Kieselsäure zersetzt, die dann kondensiert, ist nachteilig, da die Granulate einen sehr ausgeprägten Alterungseffekt zeigen. Die Dispergierbarkeit verschlechtert sich im Laufe einiger Wochen oder Monate. Dieser Alterungseffekt ist kaum vorhersagbar, da er unter anderem von der Lagerungstemperatur der Granulate abhängt.

In jüngster Zeit sind auch Granulate mit wasserunlöslichen anorganischen Bindemitteln vorgeschlagen worden. So wird in der US 6,596,072 B1 hydrophiler Ton, vorzugsweise Puzzolane, als Bindemittel zugesetzt.

Die DE 103 19 483 A1 offenbart ein dispergierbares Pigmentkonzentrat, unter anderem zum Einfärben von Baustoffen wie Beton, das wenigstens ein Pigment sowie gegebenenfalls Binde-, Dispergier- und Netzmittel enthält, mit einem Gehalt an einem Zerfalls-Hilfsmittel, das beim Kontakt mit Wasser (in ausreichender Menge) innerhalb von einer Minute ohne mechanische Einwirkung den im wesentlichen vollständigen Zerfall der Primärstruktur des Konzentrats unter Freisetzung des Pigments bewirkt. Gemäß der Lehre von DE 103 19 483 A1 dispergieren sich derartige Pigmentkonzentrate sehr rasch und vollständig. Als Zerfalls-Hilfsmittel werden vorzugsweise wasserunlösliche Cellulosefasern mit einer Teilchengröße zwischen 10 und 2000 μm eingesetzt. Die erhaltenen Pigmentgranulate sollen zum Einfärben von Baustoffen, wie Beton, von Kunststoffen und Kunstharzen und von Farben und Lacken geeignet sein. Pigmentgranulate mit großen Cellulosefaser-Partikeln sind aus praktischer Sicht für die Einfärbung von Farben, Lacken und Kunststoffen jedoch völlig ungeeignet. Große unlösliche Cellulosefasern führen bei der Granulation nach dem Sprühtrocknungsverfahren zu Schwierigkeiten, weil die Cellulosefaser-haltige Pigmentsuspension durch eine sehr feine Düse versprüht wird. Diese wird sich bei einer längeren Betriebsdauer zusetzen und verstopfen. Der Zusatz von Cellulosefasern ist also nicht für jedes Herstellungsverfahren gleichennaßen geeignet. Ein weiterer Nachteil beim Einsatz von Cellulosen ist ihre Einstufung als staubexplosionsgefährliche Stoffe. Cellulosen sind in die Staubexplosionsklasse 1 eingestuft, so dass bei ihrer Lagerung und beim Umgang im Granulationsprozess erhöhte Sicherheitsanforderungen erfüllt sein müssen. Dieser Sicherheitsaspekt trifft auf alle feinteiligen organischen Feststoffe zu. Die Verwendung eines Sprengmittels bei der Herstellung von Pigmentgranulaten ist bereits in der DE 197 31 698 A1 offenbart. Sie beschreibt die Verwendung von Sprengmitteln bei der Herstellung von Granulaten, die zum Einfärben von Baustoffen oder Asphalt geeignet sein sollen. Bei einem Sprengmittel handelt es sich meist um stark hydrophile Polymere mit einem entsprechend großen Absorptionsvermögen für Wasser. Ein solches Granulat würde in einer Asphaltmischung nicht ausreichend schnell und gut dispergiert, da bei der Verarbeitung von Asphalt überhaupt kein Wasser anwesend ist. Auch in der DE 100 02 559 B4 und in der DE 100 66 190 B4 wird bereits der Einsatz von Sprengmitteln bei der Granulatherstellung offenbart.

Der vorliegenden Erfindung lag die Aufgabe zugrunde, fließfähige, nicht staubende und gut dispergierbare Pigmentgranulate unter Vermeidung nachteiliger Zusatzstoffe zur Verfügung zu stellen. Vorzugsweise sollten die Pigmentgranutate beim Kontakt mit Wasser (in ausreichender Menge) in sehr kurzer Zeit ohne mechanische Einwirkung zerfallen, wobei im wesentlichen der vollständige Zerfall der Primärstruktur der Granulatteilchen unter Freisetzung des Pigmentes eintritt.

Überraschenderweise gelingt die Lösung der gestellten Aufgabe durch ein Pigmentgranulat, enthaltend ein oder mehrere anorganische und/oder organische Pigmente und mindestens ein anorganisches Filterhilfsmittel in ganz hervorragender Weise.

Vorzugsweise zerfällt das erfindungsgemäße Pigmentgranulat beim Kontakt mit Wasser (in ausreichender Menge, d.h. im deutlichen Überschuss) innerhalb von weniger als einer Minute, besonders bevorzugt innerhalb von weniger als 30 Sekunden, ohne mechanische Einwirkung, wobei im wesentlichen der vollständige Zerfall der Primärstruktur der Granulatteilchen unter Freisetzung des Pigmentes eintritt.

Unter "Granulat" wird im Kontext der Erfindung jedes Material verstanden, dessen mittlere Korngröße im Vergleich mit den Ausgangsmaterialien durch einen Behandlungsschritt vergrößert worden ist. "Granulat" umfasst daher nicht nur Sprühgranutate und Kompaktierungsgranulate (Press- oder Brikettiergranulate), sondern auch zum Beispiel Produkte einer Nass- oder Feuchtbehandlung mit anschließender Zerkleinerung, und Produkte trockener oder im Wesentlichen trockener Verarbeitungsschritte, zum Beispiel trocken hergestellte Granulate, Briketts und dergleichen.

Unter Filterhilfsmitteln werden Substanzen verstanden, die eine möglichst rasche Bildung eines Filterkuchens bei der Filtration von sehr feinteiligen oder schwer filtrierbaren Suspensionen ermöglichen. Durch ihre Anwesenheit ergeben sich im Filterkuchen viele Kapillaren, die klein genug sind, um die Feststoffe zurückzuhalten, aber auch zahlreich genug, um eine optimale Durchlässigkeit zu ennöglichen.

Insbesondere eignen sich solche anorganischen Filterhilfsmittel, die bei 20°C in Wasser praktisch unlöslich sind. Vorzugsweise liegt ihre Wasserlöslichkeit bei 20 °C in neutralem Wasser bei unter 3 Gew.-%, besonders bevorzugt bei unter 0,5 Gew.-%. Damit sind die anorganischen Filterhilfsmittel praktisch wasserunlöslich und tragen damit nicht zur Erhöhung der wasserlöslichen Anteile im Pigmentgranulat bei.

Vorzugsweise enthält das erfindungsgemäße Pigmentgranulat als anorganische Filterhilfsmittel Kieselgel, Kieselgur und/oder Perlit. Die anorganischen Filterhilfsmittel sind gegenüber den in DE 103 19 483 A1 beschriebenen Zerfalls-Hilfsmitteln wesentlich feinteiliger und nicht staubexplosionsgefährlich. Darüber hinaus sind sie auch noch wesentlich preiswerter. Teilweise betragen die Preise der kommerziell erhältlichen anorganischen Filterhilfsmittel weniger als 25% der Preise von Zerfalls-Hilfsmitteln auf Cellulose-Basis.

Als bevorzugtes Filterhilfsmittel wird Kieselgur eingesetzt. Kieselgur - auch Diatomeenerde, Infusorienerde oder Bergmehl genannt - ist ein sehr feinkörniges, lockeres, leichtes, kreideähnliches, meist hellgraues, zu den Kieselgesteinen gehörendes Sediment. Kieselgur besteht aus den formreichen Kieselsäure-Gerüsten mikroskopisch kleiner, seit der Trias in Süß-, Brack- und Salzwasser lebender Diatomeen. Chemische Analysen ergeben zum Teil nur geringe Gehalte an Eisen, Aluminium, Calcium, Magnesium, Mangan, Titan, Natrium, Kalium, Phosphor und Schwefel.

Als ebenfalls bevorzugte Filterhilfsmittel werden Kieselgele eingesetzt. Kieselgele - auch Silicagele oder Kieselsäuregele genannt - sind kolloidale geformte oder ungeformte Kieselsäure von elastischer bis fester Konsistenz mit lockerer bis dichter Porenstruktur und hohem Adsorptionsvermögen für Gase, Dämpfe und Flüssigkeiten. Die durch Flammenpyrolyse von $SiCl_4$ hergestellten hochdispersen "pyrogenen" $SiO_2$-Qualitäten werden nicht zu den Kieselgelen gerechnet, sondern zu den Kieselsäuren. Diese Produkte, die beispielsweise unter dem Markennamen Aerosil® von der Firma Evonik Industries (vormals Degussa) im Handel erhältlich sind, sind keine Filterhilfsmittel im Sinne dieser Erfindung.

Als ebenfalls bevorzugte Filterhilfsmittel werden Perlite eingesetzt. Perlit (Perlstein) ist ein gewöhnlich hellgraues, auch schwarzes vulkanisches Gesteinsglas von Rhyolith-Zusammensetzung, mit 70 bis 76% $SiO_2$, 11 bis 18% $Al_2O_3$, 4 bis 6% $K_2O$ und bis zu 7% Wasser. Der Name stammt von dem durch mm- bis cm-große konzentrisch-schalige Glaskügelchen bedingten perlartigen Aussehen des schalig brechenden Gesteins. Dieses Produkt ist unbrennbar, witterungsbeständig, fault und schimmelt nicht und ist daher in ganz hervorragender Weise als Filterhilfsmittel geeignet.

Vorzugsweise enthält das Pigmentgranulat anorganische Filterhilfsmittel in einer Gesamtmenge von 0,01 bis 10 Gew.-%, bevorzugt von 0,1 bis 7,5 Gew.-%, ganz besonders bevorzugt von 0,1 bis 3,5 Gew.-% bezogen auf die Gesamtmenge des Pigmentgranulates.

Die anorganischen Filterhilfsmittel können unterschiedlich feinteilig sein, was sich unter anderem in ihrer spezifischen Oberfläche ausdrückt, die nach der BET-Einpunkt Methode gemäß DIN 66 131 gemessen werden kann. Die spezifische Oberfläche der anorganischen Filterhufsmittel kann zwischen 2 und bis zu 800 m$^2$/g betragen, sie liegen vorzugsweise in diesem Bereich. Dabei werden als anorganische Filterhilfsmittel vorzugsweise Perlite mit einer spezifischen Oberfläche von 2 bis 5 m$^2$/g eingesetzt. Die vorzugsweise eingesetzte calcinierte oder fluxcalcinierte Kieselgur hat eine spezifische Oberfläche von 25 bis 50 m$^2$/g. Die vorzugsweise eingesetzten Kieselgele weisen spezifische Oberflächen von 100 bis 400 m$^2$/g auf.

Neben der spezifischen Oberfläche gibt auch die mittlere Teilchengröße und die Teilchengrößenverteilung Aufschluss über die Feinteiligkeit des Filtrationshilfsmittels. Da die anorganischen Filterhilfsmittel zumeist wasserunlösliche Verbindungen sind, kann ihre Teilchengröße sehr schnell, bequem und exakt mit einem Laserdiffraktometer gemessen werden.

Das Pigmentgranulat enthält vorzugsweise anorganische Filterhilfsmittel mit einem $D_{50}$-Wert von unter 80 μm, besonders bevorzugt von unter 40 μm gemäß der offenbarten Messmethode. Der $D_{50}$-Wert gibt die Teilchengröße an, bei der 50% der gemessenen Teilchen kleiner sind als der angegebene Wert (mittlere Teilchengröße), der $D_{90}$-Wert gibt entsprechend die Teilchengröße an, bei der 90% der gemessenen Teilchen kleiner sind als der angegebene Wert. Die Perlite sind von den anorganischen Filterhilfsmitteln die grobteiligsten. Dicalite® 478 und Dicalite® 4208 (Handelsprodukte der Firma Dicalite Europe NV), die zwei typische Vertreter für Perlit-Filterhilfsmittel darstellen, weisen beide einen $D_{50}$-Wert von 26 μm und einen $D_{90}$-Wert von 55 μm beziehungsweise 56 μm auf. Die Teilchengrößenverteilung ist also recht schmal. Damit sind diese Perlite deutlich feinteiliger als Cellulosen, die gemäß DE 103 19 483 A1 als Zerfalls-Hilfsmittel eingesetzt werden können. Deren $D_{50}$-Wert liegt meist bei 100 μm oder sogar deutlich darüber, ihr $D_{90}$-Wert liegt bei 350 μm, kann aber auch 1000 μm und mehr sein. Kieselgur weist vorzugsweise einen $D_{50}$-Wert von unter 40 μm besonders bevorzugt von unter 30 μm auf. Kieselgele können noch feinteiliger sein.

Ebenfalls bevorzugt weisen anorganische Filterhilfsmitteln eine bestimmte Permeabilität (Durchlässigkeit) und Permeable Filterkuchendichte (PCD = Permeability Cake Density) auf.

Die verschiedenen anorganischen Filterhilfsmittel zeichnen sich in der Regel durch verschiedene PCD-Werte aus. Das erfindungsgemäße Pigmentgranulat enthält vorzugsweise anorganische Filterhilfsmittel mit einer Permeablen Filterkuchendichten (PCD) im Bereich von 0,10 bis 0,52 g/ml, besonders bevorzugt von 0,15 bis 0,46 g/ml, gemäß der offenbarten Messmethode. Die vorzugsweise eingesetzten Perlite liegen hinsichtlich ihres PCD-Wertes vorzugsweise im Bereich von 0,15 bis 0,43 g/ml. Perlite bilden als Filterhilfsmittel weniger dichte Filterkuchen als Kieselgur. Die vorzugsweise eingesetzte Kieselgur liegt hinsichtlich ihres PCD-Wertes vorzugsweise im Bereich von 0,37 bis 0,46 g/ml.

Eine weitere wichtige Kenngröße von Filterhilfsmitteln ist ihre Permeabilität (Durchlässigkeit). Die Permeabilität von Filterhilfsmitteln wird in der Einheit Darcy angegeben und kann in standardisierten Versuchsapparaturen bestimmt werden. Ein Darcy entspricht der Permeabilität durch ein 1 cm dickes Filtermedium, welches einen Durchfluss von 1 cm$^3$ Flüssigkeit mit einer Viskosität von 1 cP durch eine Fläche von 1 cm$^2$ in 1 s unter einer Druckdifferenz von 1 atm erlaubt. Die Permeabilitäten der anorganischen Filterhilfsmittel können sich über einen sehr weiten Bereich erstrecken. Die vorzugsweise verwendete Kieselgur weist Permeabilitäten zwischen 0,02 und 30,0 Darcy auf. Besonders bevorzugt wird Kieselgur mit einer Permeabilität von 0,025 bis 8,0 Darcy verwendet. Die vorzugsweise verwendeten Perlite weisen Permeabilitäten zwischen 0,02 und 10 Darcy auf. Besonders vorzugsweise werden Perlite mit einer Permeabilität von 0,06 bis 8,0 Darcy verwendet.

Die erfindungsgemäßen Pigmentgranulate können sowohl organische oder auch anorganische Bunt- oder Unbuntpigmente (Schwarz- und Weißpigmente) enthalten. Als anorganische Pigmente werden vorzugsweise Eisenoxid-, Titandioxid-, Chromoxid-, Zinkoxid-, Manganoxid-, Rutilmischphasenpigmente und Ruß (Kohlenstoffpigmente) oder Mischungen davon eingesetzt. Als organische Pigmente werden vorzugsweise Azo-, Chinacridon-, Phthalocyanin- und Perylen-Pigmente und Indigoide oder Mischungen davon eingesetzt. Auch der Einsatz von einem oder mehreren anorganischen Pigmenten in Abmischung mit einem oder mehreren organischen Pigmenten ist denkbar. Die Verwendung von Metallglanzpigmenten oder Effektpigmenten ist auch möglich, aber weniger bevorzugt.

Das erfindungsgemäße Pigmentgranulat kann gegebenenfalls noch weitere Hilfsmittel enthalten. Das erfindungsgemäße Pigmentgranulat enthält als Hilfsmittel vorzugsweise Netzmittel oder Dispergieradditive oder Wasser oder Salze aus der Gruppe der Phosphate, Phosphonate, Carbonate, Sulfate, Sulfonate, Aluminate, Borate, Titanate, Formiate, Oxalate, Zitrate, Tartrate, Stearate, Acetate, Cellulosederivate, wie insbesondere Celluloseether oder Celluloseester, Phosphonocarbonsäuren, modifizierte Silane, Silikonöle, Öle aus biologischem Anbau (insbesondere Rapsöl, Sojabohnenöl, Maiskeimöl, Olivenöl, Kokosöl, Sonnenblumenöl), raffinierte Erdöle auf paraffinischer und/oder naphthenischer Basis oder synthetisch hergestellte Öle.

Die Netzmittel sind vorzugsweise Gluconsäure, Alkylbenzolsulfonate, Fettalkoholsulfate, Fettalkoholethersulfate, sulfatierte Polyglykolether, Fettalkoholethoxylat, Alkylphenolethoxylat, Alkylphenole, Glykole, Polyether, Polyglykole, Polyglykolderivate, Ethylenoxid-Propylenoxid-Copolymere, verzweigte und/oder unverzweigte Alkan- oder Olefinsulfonate, verzweigte und/oder unverzweigte Alkan- oder Olefinsulfate und Sulfosuccinate oder Lösungen oder Mischungen oder Suspensionen oder Emulsionen davon. Bevorzugt enthält das erfindungsgemäße Pigmentgranulat Polyethylenglykol.

Die Dispergieradditive sind vorzugsweise Liginsulfonate, Melaminsulfonate, Melaminformaldehydkondensate, Naphthalinsulfonate, Alkylnaphthalinsulfonate, Naphthalinformaldehydkondensate, Seifen, Metallseifen, teil- oder vollhydrolysierte Polyvinylalkohole, Polyvinylsulfate, Polyacrylamide, Polyacrylate, Polyvinylacetate, Polycarboxylatether, Polyhydroxyverbindungen, Polyhydroxyaminoverbindungen, mittel- und langkettige Alkansulfate oder -sulfonate oder -sulfosuccinate sowie mittel- und langkettige Alkanphosphate oder -phosphonate. Bevorzugt enthält das erfindungsgemäße Pigmentgranulat Ligninsulfonat.

Vorzugsweise enthält das erfindungsgemäße Pigmentgranulat Hilfsmittel in einer Gesamtmenge von 0,01 bis 10 Gew.-%, besonders bevorzugt von 0,1 bis 5 Gew.-%, bezogen auf das Pigmentgranulat.

Füllstoffe - auch Füllmittel, Streckungsmittel oder Extender genannt. Dies sind meist relativ preiswerte Stoffe, die man dem Pigmentgranulat beimischt, um dessen Volumen und/oder Gewicht zu erhöhen, aber auch, um die technischen Eigenschaften zu verbessern. Prinzipiell kann das Zumischen des Füllstoffes vor oder nach der Granulation erfolgen. Vorzugsweise erfolgt das Zumischen der Füllstoffe vor der Granulation gemeinsam mit dem oder den anorganischen Filterhilfsmitteln und gegebenenfalls weiteren Hilfsstoffen, so dass die Füllstoffpartikel homogen in den einzelnen Granulatpartikeln verteilt sind. Dadurch kann ein durch und durch homogenes Pigmentgranulat erhalten werden.

Vorzugsweise sind die Füllstoffe farblose anorganische oder synthetische lamellare oder nicht lamellare Partikel sind, die besonders bevorzugte unter Talk, Glimmer, Calciumcarbonat, Nylonpulvern, Poly(β-alanin)pulvern, Polyethylenpulvern, Teflon, Lauroyllysin, Bornitrid, Bismutoxidchlorid, Polytetrafluorethylenpulvern, Polymethylmethacrylatpulvern, Polyurethanpulvern, Polystyrolpulvern, Polyesterpulvern, synthetischen Mikrohohlkugeln, Mikroschwämmen, Mikrokugeln aus Silikonharz, den Oxiden von Zirconium und Cer, gefälltem Calciumcarbonat oder Kreide, Magnesiumcarbonat, Magnesiumhydrogencarbonat, Hydroxylapatit, Mikrohohlkugeln aus Kieselsäuren, Mikrokapseln aus Glas oder aus Keramik, Metallseifen, die von organischen Carbonsäuren mit 8 bis 22 Kohlenstoffatomen und bevorzugt mit 12 bis 18 Kohlenstoffatomen abgeleitet sind, wie Zinkstearat, Magnesiumstearat, Lithiumstearat, Zinklaurat, Magnesiummyristat, sowie den Polyethylenterephthalat/Polymethacrylat-Polymeren in Form von Plättchen ausgewählt werden.

Das erfindungsgemäße Pigmentgranulat enthält vorzugsweise Füllstoffe in einer Gesamtmenge von maximal 40 Gew.-%, besonders bevorzugt von maximal 10 Gew.-%, bezogen auf das Pigmentgranulat.

Das erfindungsgemäße Pigmentgranulat zeichnet sich vorzugsweise dadurch aus, dass mindestens 85 % des Pigmentgranulates eine Teilchengröße im Bereich von 60 bis 3000 $\mu$m, besonders bevorzugt im Bereich von 80 bis 1500 $\mu$m, aufweist.

Vorzugsweise liegt das erfindungsgemäße Pigmentgranulat als Perlgranulat vor. Solche Perlgranulate werden vorzugsweise - ausgehend von Pigmentsuspensionen oder Pigmentpasten - durch Sprühtrocknung erhalten. Insbesondere werden Sprühtrockner (Zerstäubungstrockner) eingesetzt, die mit Sprühscheiben oder -düsen im Gleich- oder Gegenstromverfahren arbeiten. Die nach diesem Verfahren erhaltenen Pigmentgranulate weisen in der Regel eine mittlere Teilchengröße im Bereich von 80 bis 250 $\mu$m auf.

Ebenfalls vorzugsweise liegt das erfindungsgemäße Pigmentgranulat als Press- oder Brikettiergranulat vor. Solche Granulate können auch ausgehend von Trockenpigmenten, zum Beispiel Fertiggut, hergestellt werden. Der Herstellungsprozess umfasst mindestens einen Press- oder Brikettierschritt und weitere Folgeschritte wie Zerkleinern, Sieben und Rückführen von Grob- und/oder Feingut. Die erhaltenen Granulate können mit einer zusätzlichen Schicht umhüllt werden, die zur Erhöhung der Stabilität beziehungsweise als Hilfe bei der Verarbeitung dient. Gegebenenfalls können die Press- oder Brikettiergranulate vor oder nach der Umhüllung durch einen Rundungsschritt abgerundet werden, wodurch sich das Fließverhalten weiter verbessert.

Das erfindungsgemäße Pigmentgranulat weist vorzugsweise einen Restwassergehalt von unter 5 Gew.-%, besonders bevorzugt von unter 4 Gew.-%, auf. Dieser kann gegebenenfalls durch eine Nachtrocknung erreicht werden.

Die Erfindung betrifft auch ein Verfahren zur Herstellung von Pigmentgranulaten, dadurch gekennzeichnet, dass in bekannter Weise hergestellte ein oder mehrere anorganische und/oder organische Pigmente mit mindestens einem anorganischen Filterhilfsmittel sowie gegebenenfalls weiteren Hilfsmitteln und/oder Füllstoffen gemischt werden und die Mischung einem Granulationsprozess unterworfen wird.

Die Herstellung des erfindungsgemäßen Pigmentgranulates kann entweder ausgehend vom trockenem Pigment oder auch in der Nassphase (Suspension oder Paste) erfolgen.

Besonders vorteilhaft ist die Herstellung des erfindungsgemäßen Pigmentgranulates aus der Nassphase heraus, weil zahlreiche synthetisch hergestellte Pigmente in der Nassphase synthetisiert werden. Die Abtrennung des Feststoffes von der Flüssigkeit geschieht dann in der Regel durch Filtration, wobei sich fast immer auch eine Waschung anschließt, um die Pigmente salzfrei zu waschen. Pigmente sind allgemein sehr feinteilige Produkte, da die Pigmentpartikel zur Erzielung eines optimalen Farbeindruckes in der Größenordnung der Wellenlänge des sichtbaren Lichtes liegen sollten. Die Primärteilchen der Pigmente liegen in der Größenordnung von ca. 1 $\mu$m. Derart feinteilige Produkte sind entsprechend schwer zu filtrieren, so dass dem Filtrations- und Waschprozess im gesamten Aufarbeitungsprozess bei der Pigmentherstellung eine zentrale Bedeutung zukommt. So kann bei der Wahl des falschen Filtermediums sehr viel Feststoff durch das Filter laufen, der dann als so genannter Filterdurchschlag entweder verloren ist oder aufwändig zurückgeführt werden muss. Beides führt zu empfindlichen Einbußen bei der Wirtschaftlichkeit und der Kapazität des Herstellungsverfahrens. Ein sehr hoher Filterdurchschlag kann zum Beispiel die Folge eines Filtermediums mit zu grober Porenstruktur sein. Bei Farbpigmenten, bei denen die Farbeigenschaften sehr stark von der Teilchengröße und -form abhängen, kann es vorkommen, dass die feinteiligen Pigmentpartikel in der Pigmentsuspension durch das Filtermedium laufen und als Filterdurchschlag verloren gehen, während die grobteiligeren Partikel zurückgehalten werden. Damit verändert sich dann aber die Gesamtzusammensetzung der Pigmentpaste, was zu mehr oder weniger deutlichen und unerwünschten Farbveränderungen führt. Wenn andererseits ein Filtermedium mit zu feiner Porenstruktur eingesetzt wird, so steigen die Filtrations- und Waschzeiten sehr stark an. Im schlimmsten Fall ist das Filtermedium innerhalb kürzester Zeit blockiert und der Filtrationsvorgang muss abgebrochen werden. Um die Filtration von besonders feinteiligen und schwer filtrierbaren Feststoffteilchen zu erleichtern, können Filterhilfsmittel eingesetzt werden. Wenn das Zumischen des anorganischen Filterhilfsmittels vor oder während der Filtration und/oder Waschung der Pigmente erfolgt, kann zusätzlich noch der äußerst positive Effekts des Filterhilfsmittel bei der Fest/Flüssig-Trennung und gegebenenfalls auch bei der Waschung ausgenutzt werden. Durch ihre Anwesenheit bei der Filtration und/oder Waschung kann der Pigmentverlust als Folge von Filterdurchschlag deutlich verringert sowie gegebenenfalls auch die Filtrier- und Waschzeiten verkürzt werden.

Vorzugsweise erfolgt das Mischen des anorganischen Filterhilfsmittels mit einem oder mehreren anorganischen oder organischen Pigmenten in der Nassphase, wonach die feuchte Mischung anschließend einem Granulationsprozess unterworfen wird. Vorzugsweise ist die Nassphase eine wässrige Suspension oder Paste aus dem Pigmentherstellungsprozess. Vorzugsweise wird die Pigmentsuspension vor dem Mischen mit dem Filterhilfsmittel noch einer Dispergierung unterworfen. Bei der Dispergierung wird das Pigment vorzugsweise zwischen zwei Flächen gerieben oder die Pigmentagglomerate werden durch Prall- und Scherkräfte zerlegt, die von schnell rotierenden Scheiben erzeugt werden. Auch die Kombination aus diesen beiden Arbeitsweisen ist möglich. Dem Fachmann sind alle Dispergiergeräte bekannt, die nach diesen Prinzipien arbeiten und für die Dispergierung von festen Pigmenten in einer flüssigen Phase geeignet sind. Die auf diese Weise hergestellte Pigment-Suspension kann dann mit dem Filterhilfsmittel vermischt werden und dem Filtrationsschritt zugeführt werden.

Grundsätzlich ist es auch möglich, zuerst das Mischen des anorganischen Filterhilfsmittels mit einem oder mehreren anorganischen oder organischen Pigmenten in der Nassphase vorzunehmen und dann die fertige Mischung noch einem Dispergierschritt zu unterwerfen. Dann können bei der Dispergierung nicht nur Pigmentagglomerate sondern gleichzeitig auch Agglomerate oder Partikel des anorganischen Filterhilfsmittels zerstört werden. Für die Dispergierung können die gleichen wie die bereits oben erwähnten Aggregate eingesetzt werden. Die hergestellte Pigment-/Filterhilfsmittel-Suspension kann dann dem Filtrationsschritt zugeführt werden.

Grundsätzlich ist es auch möglich, das anorganische Filterhilfsmittel zu einer Suspension anzumaischen, um sie dann in flüssiger Form zu der Pigmentsuspension oder -paste zuzudosieren. Als Suspensionsmedium wird vorzugsweise Wasser eingesetzt. Dann können bei der Dispergierung Agglomerate des anorganischen Filterhilfsmittels zerstört werden. Für die Dispergierung können die gleichen wie die bereits oben erwähnten Aggregate eingesetzt werden. Es ist in der Regel völlig ausreichend, wenn Rührwerke zum Dispergieren eingesetzt werden. Die hergestellte Pigment-/Filterhilfsmittel-Suspension kann dann der Filtration zugeführt werden. Die Filterhilfsmittel-Suspension wird also in diesem Fall vor oder unmittelbar während der Filtration mit dem Pigment in Nassphase vermischt, indem sie der Pigmentsuspension oder -paste zudosiert wird. Sie kann beispielsweise direkt in die Filtrationsvorlage oder in den Filtereinlauf oder in die Filterwanne zudosiert werden. Erfolgt das Vermischen des anorganischen Filterhilfsmittels vor oder während der Filtration mit dem Pigment in der Nassphase, dann wirkt das Filterhilfsmittel nach der so genannten Bodyfeed-Methode (Dauerdosierung). Der langsam anwachsende Filterkuchen bleibt dadurch locker und durchlässig und die Filterstandzeit wird deutlich verlängert.

Für die Filtration können kontinuierlich oder diskontinuierlich arbeitende Filtrationsapparate eingesetzt werden. Die Filtration kann auch unter Druck oder unter Vakuum durchgeführt werden.

Bei der kontinuierlichen Filtration, wie sie beispielsweise mit Hilfe von Vakuum-Trommelfiltern ausgeführt werden kann, ist es besonders vorteilhaft, wenn die Filtration unter Mithilfe eines Filterhilfsmittels nach der so genannten Precoat-Methode durchgeführt wird. Dabei wird vor der eigentlichen Filtration der Pigmentsuspension erst eine dünne Schicht aus Filterhilfsmittel auf das Filtermedium aufgebracht (Anschwemmung oder Precoat). Dies kann zum Beispiel dadurch erfolgen, dass zu Beginn der Filtration zuerst die bereits oben erwähnte Filterhilfsmittel-Suspension über das Filter filtriert wird. Dabei baut sich eine meist 1,0 bis 3,0 mm dünne Schicht des Filterhilfsmittels auf dem Filtermedium auf. Diese schützt im Folgenden das Filtermedium und stellt den Ablauf eines klaren Filtrats sicher, indem Pigmentpartikel an ihrer Oberfläche zurückgehalten werden. Die Precoat-Schicht bildet sich am einfachsten dadurch aus, indem eine Filterhilfsmittel-Suspension im Kreislauf auf das Filtermedium gepumpt wird. Es lagern sich dann zunächst die gröberen Partikel auf dem Filtermedium ab, dann auch die feineren. Vorzugsweise erfolgt das Aufbringen der Precoat-Schicht mit einer Geschwindigkeit von ca. 40 1/m$^2$/min, wobei dieser Wert aber nur einen Richtwert darstellt. Wenn die Filterhilfsmittel-Suspension nämlich sehr viskos ist, dann sind wesentlich niedrigere Geschwindigkeiten von Vorteil.

Unabhängig davon, ob die Filtration der Pigmentsuspension mit einem anorganischen Filterhilfsmittels nach der Bodyfeed- oder nach der Precoat-Methode erfolgt, kann es grundsätzlich vorteilhaft sein, die zugesetzte Menge Filterhilfsmittel über das für die reine Filtration erforderliche Maß zu erhöhen, wenn dadurch ein Pigmentgranulat mit verbesserten Eigenschaften hergestellt werden kann. Selbstverständlich kann für den Filtrationsprozess auch nur die Menge Filterhilfsmittel zugesetzt werden, die zur Verbesserung des Filtrations- und/oder Waschprozesses erforderlich ist. Vorzugsweise wird beim Filtrationsprozess nur die erforderliche Menge an anorganischem Filterhilfsmittel zugesetzt. Unmittelbar nach der Filtration und/oder Waschung kann dann in jedem weitem Verfahrensschritt ein weiteres anorganisches Filterhilfsmittel zugesetzt werden. Dieses muss nicht notwendigerweise das identische anorganische Filterhilfsmittel sein, mit dessen Hilfe die Filtration durchgeführt wurde. Es kann durchaus vorteilhaft sein, ein oder mehrere andere anorganische Filterhilfsmittel zuzusetzen, so dass schließlich ein Pigmentgranulat erhalten wird, das verschiedene Filterhilfsmittel enthält.

In der Regel ist es bei der Filtration von Pigmentsuspensionen mit anorganischen Filterhilfsmitteln ausreichend, wenn nur ein Filterhilfsmittel zugesetzt wird. Dies betrifft sowohl die Filtration nach der Precoat- als auch nach der Bodyfeed-Methode. Gleichwohl kann es bei der Filtration und/oder Waschung von bestimmten Pigmenten vorteilhaft sein, Mischungen aus mehreren anorganischen Filterhilfsmitteln einzusetzen. Die zugesetzte Menge dieser Filterhilfsmittel-Mischungen kann über das für die reine Filtration erforderliche Maß hinausgehen, wenn dadurch ein Pigmentgranulat mit verbesserten Eigenschaften hergestellt werden kann. Selbstverständlich kann für den Filtrationsprozess auch nur die Menge einer Filterhilfsmittel-Mischung zugesetzt werden, die zur Verbesserung des Filtrations- und/oder Waschprozesses erforderlich ist. Vorzugsweise wird beim Filtrationsprozess nur die erforderliche Menge an einer Mischung aus anorganischen Filterhilfsmitteln zugesetzt. Unmittelbar nach der Filtration und/oder Waschung können dann in jedem weiteren Verfahrensschritt ein oder mehrere weitere anorganische Filterhilfsmittel zugesetzt werden.

Das Pigment, welches nach dem Filtrations- und gegebenenfalls Waschvorgang vom Filter abgenommen wird, enthält das oder die zuvor zugesetzten anorganischen Filterhilfsmittel. Wenn die Filtration nach der Bodyfeed-Methode erfolgt ist, ist die vom Filtermedium abgenommene Pigment/Filterhilfsmittel-Mischung weitgehend homogen. Bei der Filtration nach der Precoat-Methode kann davon nicht ausgegangen werden. Deshalb wird in diesem Fall vorzugsweise noch ein Homogenisierungsschritt am Filterkuchen durchgeführt. Dieser kann entweder direkt am pastösen Filterkuchen durchgeführt werden, indem beispielsweise Mischer, Schnecken, Kneter, Walzwerke, Kugelmühlen oder Rührwerksmühlen eingesetzt werden. Der dann erhaltene pastöse Pigment/Filterhilfsmittel-Filterkuchen kann für die Herstellung von Extrusionsgranulaten oder von Aufbaugranulaten verwendet werden, wobei sich allerdings dann noch ein Trocknungsschritt anschließen muss. Der erhaltene pastöse Pigment/Filterhitfsmittet-Fitterkuchen kann aber auch getrocknet, gegebenenfalls gemahlen und dann als trockene Pigment/Filterhilfsmittel-Mischung einem Granulationsprozess unterworfen werden. In einem solchen Fall bietet sich ein Press- oder Brikettierverfahren an, um ausgehend von einer trockenen pulverförmigen Pigment/Filterlifsmittel-Mischung Pigmentgranulate herzustellen. Wenn der erhaltene pastöse Pigment/Filterhilfsmittel-Filterkuchen im weiteren Verarbeitungsprozess aber wieder mit Wasser oder einer anderen Flüssigkeit verdünnt wird, weil er beispielsweise durch Sprühgranulation oder Wirbelschichttrocknung in ein Perlgranulat überführt werden soll, dann erfolgt das Homogenisieren vorzugsweise nach der Wasser- oder Flüssigkeitszugabe, weil dadurch die Viskosität absinkt, so dass problemlos Rührwerke oder Dissolver für die Herstellung einer homogenen Suspension verwendet werden können. Der Granulationsprozess zur Herstellung eines erfindungsgemäßen Pigmentgranulates erfolgt vorzugsweise durch Sprühtrocknung oder Wirbelschichttrocknung.

Vorzugsweise erfolgt das Mischen des anorganischen Filterhilfsmittels mit einem oder mehreren anorganischen oder organischen Pigmenten in der Nassphase und die feuchte Mischung wird einem Granulationsprozess unterworfen. Vorzugsweise ist die Nassphase eine erneute Dispersion von agglomerierten Partikeln. Durch das erneute Dispergieren von bereits agglomerierten Partikeln, kann ausgehend von Pigmentpulvern gezielt eine Pigmentsuspension oder -paste für die Umsetzung mit einem oder mehreren anorganischen Filterhilfsmitteln hergestellt werden. Vorzugsweise wird die Pigmentsuspension oder -paste vor dem Mischen mit dem Filterhilfsmittel noch einer Dispergierung unterworfen. Dazu können alles bereits prinzipiell die gleichen Aggregate verwendet werden, wie bereits oben erwähnt, wenn die Nassphase eine Suspension oder Paste aus dem Pigmentherstellungsprozess ist. Wie bereits oben beschrieben kann das Filterhilfsmittel direkt als Feststoff oder in Form einer zuvor angemaischten Suspension der Pigmentsuspension oder -paste zudosiert werden. Wenn die Nassphase eine erneute Dispersion von agglomerierten Partikeln, also beispielsweise Fertiggut, ist, ist eine erneute Filtration und Waschung nicht mehr erforderlich, so dass direkt eine Trocknung der Pigment/ Filterhilfsmittel-Mischung erfolgen kann. Für den Trocknungsschritt stehen dem Fachmann die bereits oben erwähnten Aggregate zur Verfügung. Die Trocknung erfolgt vorzugsweise durch Sprühtrocknung oder Wirbelschichttrocknung. Vorzugsweise werden Sprühtrockner (Zerstäubungstrockner) eingesetzt, die mit Sprühscheiben oder -düsen im Gleichoder Gegenstromverfahren arbeiten, womit ein Perlgranulat erhalten werden kann.

Bei Pigmenten, die sich gut filtrieren lassen und bei denen der Filtrations- und Waschvorgang nicht unbedingt durch Zusatz eines anorganischen Filterhilfsmittels verbessert werden muss, kann der Zusatz des oder der anorganischen Filterhilfsmittel auch erst nach der Filtration erfolgen. Besonders vorteilhaft ist es in einem solchen Fall, wenn der Filterkuchen zuerst getrocknet wird und das Mischen mit einem oder mehreren anorganischen Filterhilfsmitteln in trockenem Zustand erfolgt. Für den Trocknungsschritt steht dem Fachmann eine Reihe von Aggregaten zur Verfügung. Die Trocknung erfolgt vorzugsweise durch Sprühtrocknung oder Wirbelschichttrocknung oder mit Hilfe von Bandtrocknern. Je nach gewähltem Trocknungsaggregat kann es erforderlich sein, dass sich noch ein Mahlschritt anschließt. Vor oder nach der Mahlung können zusätzlich noch weitere anorganische Filterhilfsmittel zugesetzt und untergemischt werden. Zum Mischen können alle üblichen technische Apparate verwendet werden. Werden nur kleine Mengen eines oder mehrer anorganischer Filterhilfsmittel mit einer großen Menge Pigment vermischt, so kann die Herstellung einer Vormischung vorteilhaft sein. Die erhaltene Pigment/Filterhilfsmittel-Mischung wird dann gegebenenfalls gemahlen. Die Wahl des geeigneten Granulationsprozesses hängt unter anderem davon ab, ob das oder die anorganischen Filterhilfsmittel bereits in der Nassphase (Suspension oder Paste) zugesetzt wird beziehungsweise werden oder zum vorher getrockneten Pigment zugesetzt werden. Vorzugsweise erfolgt das Mischen des anorganischen Filterhilfsmittels mit einem oder mehreren anorganischen oder organischen Pigmenten in trockener Phase, wonach die trockene Mischung anschließend einem Granulationsprozess unterworfen wird. In diesem Fall bietet sich in vorteilhafter Weise ein Press- oder Brikettierprozess oder eine Aufbaugranulation an. Der Granulationsprozess zur Herstellung eines erfindungsgemäßen Pigmentgranulates ist vorzugsweise ein Press- oder Brikettierprozess. Ein solcher Granulationsprozess umfasst einen oder mehrere Press- oder Brikettierschritte mit Folgeschritten wie Siebmahlen, Sieben und Rückführen von Grobund/oder Feingut und gegebenenfalls einen Rundungsschritt oder eine Aufbaugranulation auf einem Drehteller (Pelletierteller), in einer Drageetrommel oder einer Drehtrommel (Pelletiertrommel), in einer Siebanlage oder in einem Wirbelbett oder in einem Fließbett. Eine reine Aufbaugranulation, wie sie klassisch auf einem Drehteller (Pelletierteller) oder einer Drehtrommel (Pelletiertrommel), in einem Mischer unter hoher Turbulenz durchgeführt werden kann, ist ebenfalls möglich.

Während des Herstellungsprozesses können zu jedem beliebigen Zeitpunkt auch noch ein oder mehrere Füllstoffe zugesetzt werden. Sie können beispielsweise vor oder während oder nach der Filtration zugesetzt werden. Wenn die Granulation ausgehend von trockenem Pulver erfolgt, dann können der oder die Füllstoffe auch erst nach der Trocknung und unmittelbar vor dem Granulationsprozess zugesetzt werden. Wenn das Pigmentpulver beziehungsweise die Pigment/Filterhilfsmittel-Mischung nach der Trocknung und vor der Granulation noch gemahlen werden soll, dann können der oder die Füllstoffe auch vor der Mahlung zugesetzt werden.

Ebenso können zu jedem beliebigen Zeitpunkt während des Herstellungsprozesses ein oder mehrere Hilfsmittel zugesetzt werden. Sie können beispielsweise vor oder während oder nach der Filtration zugesetzt werden. Sofern es sich dabei um wasserlösliche oder eluierbare Hilfsmittel handelt, werden sie der Pigment/Filterhilfsmittel-Mischung vorzugsweise erst nach der Filtration zugesetzt. Wenn die Granulation ausgehend von trockenem Pulver erfolgt, dann können das oder die Hilfsmittel auch erst nach der Trocknung und unmittelbar vor dem Granulationsprozess zugesetzt werden. Wenn das Pigmentpulver beziehungsweise die Pigment/Filterhilfsmittel-Mischung nach der Trocknung und vor der Granulation noch gemahlen werden soll, dann können das oder die Hilfsmittel auch vor der Mahlung zugesetzt werden.

Die erfindungsgemäßen Pigmentgranulate zeichnen sich aus durch eine gute Fließfähigkeit, durch einen geringen Staubanteil, durch schnellen Zerfall in Wasser sowie durch eine hohe Dispergierbarkeit in sämtlichen Anwendungsmedien.

Die Erfindung betrifft auch die Verwendung des erfindungsgemäßen Pigmentgranulates zur Einfärbung von kalk- und/oder zementgebundenen Baustoffen, wie Beton, Zementmörtel, Putz, Kalksandstein und zum Einfärben von Asphalt und Papier und zur Einfärbung von organischen Medien, wie Lacken, Kunststoffen und Farbpasten, und zur Herstellung von Dispersionsfarben und Slurries. Kalk- und/oder zementgebundene Baustoffe im Sinne dieser Erfindung sind vorzugsweise Beton, Zementmörtel, Putz und Kalksandstein. Unter dem Oberbegriff Asphalt werden Asphalt, Bitumen, sämtliche bitumösen Stoffe und Teer zusammengefasst.

In der Regel wird das Pigmentgranulat direkt mit den kalk- und/oder zementgebundenen Baustoffen vermischt, bevor der Mischung das Anmachwasser zugesetzt wird. Vorzugsweise wird das erfindungsgemäße Pigmentgranulat mit den kalk- und/oder zementgebundenen Baustoffen in einer Menge von 0,1 bis 10 Gew.-%, bezogen auf Zement, oder bei Asphalt in einer Menge von 0,1 bis 10 Gew.-% bezogen auf das gesamte Mischgut, vermischt.

Da das erfindungsgemäße Pigmentgranulat eine hervorragende Dispergierbarkeit beim Einrühren oder Einstreuen in Wasser besitzt, kann es auch im Anmachwasser dispergiert werden und die so erhaltene Pigmentsuspension mit den kalk- und/oder zementgebundenen Baustoffen vermischt werden. Vorzugsweise wird das erfindungsgemäße Pigmentgranulat erst in Wasser suspendiert und anschließend mit den kalk- und oder zementgebundenen Baustoffen vermischt.

Vorzugsweise wird das erfindungsgemäße Pigmentgranulat mit den organischen Medien vermischt, wobei die organischen Medien vorzugsweise Pulverlacke oder Kunststoffe sind. Vorzugsweise sind die Kunststoffe Thermoplaste, Duroplaste und/oder Elastomere. Das Pigmentgranulat wird vorzugsweise mit flüssigen Kunststoffen vermischt.

Die organischen Medien sind vorzugsweise Polymere mit gummielastischen Eigenschaften.

Das erfindungsgemäße Pigmentgranulat wird vorzugsweise mit den Dispersionsfarben oder mit Wasser vermischt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

**Beispiele und Methoden**

Anhand der nachfolgenden Beispiele wird die Erfindung näher erläutet, ohne dass dadurch eine Einschränkung der Erfindung bewirkt werden soll.

**I. Beschreibung der verwendeten Mess- und Prüfmethoden**

**I.1 Baustoff-Farbtest**

Die Bestimmung der Dispergierbarkeit für Baustoffe erfolgt in Zementmörtel über die farbmetrische Messung von mit Weißzement hergestellten Prismen bei folgenden Daten:

Zement-Quarzsand-Verhältnis 1:4, Wasser-Zement-Wert 0,35, Pigmentierungshöhe 1,2% bezogen auf Zement, verwendeter Mischer von RK Toni Technik, Berlin, mit 51-Mischschüssel, Bauform 1551, Drehzahl 140 U/min, Ansatz: 1200 g Quarzsand 0,1 bis 1 mm, 600 g Quarzsand 1 bis 2 mm, 200 g Kalksteinmehl (< 5% Siebrückstand auf 90 $\mu$m-Sieb), 500 g Weißzement. Die Quarzsandfraktionen und das Kalksteinmehl werden zusammen im Mischbehälter vorgelegt. Anschließend wird das Pigment zugegeben und 10 s vorgemischt (Mischer Stufe 1: langsam). Zu dieser Mischung wird nun das Wasser gegeben, wobei darauf zu achten ist, dass es in die Mitte der Mischung eingebracht wird. Nach dem Versickern wird der Zement zugesetzt und gemischt (Mischer Stufe 1: langsam). Nach 40 s, 55 s, 70 s, 85 s und 100 s Mischzeit werden jeweils Mischungsproben (300 g) entnommen und daraus Probekörper (5 x 10 x 2,5 cm) unter Druck hergestellt (Presskraft 114 kN für 2 Sekunden). Härtung der Probekörper: 24 Std. bei 30 °C und 95 % rel. Luftfeuchte mit anschließendem Trocknen 4 Std. bei 60°C. Farbdatenmessung über Dataflash® 2000 Datacolor International, 4 Messpunkte je Stein. Die erhaltenen Mittelwerte werden verglichen mit den Werten einer Referenzprobe. Beurteilt werden der Farbabstand $\Delta E_{ab}^*$ und die relative Farbstärke (Referenzprobe = 100 %) (CIELAB-System (1976) wie in ASTM E 308 (2006) und ASTM D 2244 (1993) beschrieben). Im Sinne dieser Anmeldung werden die folgenden farbmetrischen Abkürzungen und Berechnungen verwendet, wie sie aus dem CIELAB-System (1976) bekannt sind:

- a* entspricht der Rot-Grün-Achse mit $\Delta a^* = a^*$ (Probe) - a* (Bezug)

- b* entspricht der Gelb-Blau-Achse mit $\Delta b^* = b^*$ (Probe) - b* (Bezug)

- L* entspricht der Helligkeit mit $\Delta L^* = L^*$ (Probe) - L* (Bezug).

- $\Delta_{ab}^*$ entspricht dem Farbabstand, wobei $(\Delta E_{ab}^*)^2 = (\Delta L)^2 + (\Delta a^*)^2 + (\Delta b^*)^2$, d. h. $\Delta E_{ab}^* = [(\Delta L)^2 + (\Delta a^*)^2 + (\Delta b^*)^2]^{1/2}$,

Für die relative Farbstärke in % gelten folgende Gleichungen:

$$\text{Relative Farbstärke in \%} = \frac{(K/S)_{Probe}}{(K/S)_{Bezug}} \cdot 100$$

$$K/S = \frac{(1 - \beta^*)^2}{2 \cdot \beta^*}$$

$$\beta^* = \frac{Y/100 - r_0}{1 - r_0 - r_2 \cdot (1 - Y/100)} ,$$

wobei $r_0 = 0,04$ und $r_2 = 0,6$ und Y der Normfarbwert (Helligkeit) ist.

Die Dispergierbarkeit wird als gut bezeichnet bei einem Farbstärkenunterschied bis 5 % gegenüber der Referenzprobe und einem Farbabstand $\Delta E_{ab}^*$ von maximal 1,5 Einheiten.

## I.2 Bestimmung der Druckfestigkeit

Die Druckfestigkeit wurde in Anlehnung an DIN EN 196-1 bestimmt. Geprüft wird dabei die Druckfestigkeit von pigmentiertem Zementmörtel im Vergleich zu einer unpigmentierten Probe, wobei die Abweichungen nicht größer sein dürfen als in der EN 12878 "Pigmente zum Einfärben von kalk- und/oder zementgebundenen Baustoffen" vorgegeben (maximal -8% für bewehrten Beton).

I.3 Bestimmung des Erstarrungsverhaltens

Das Erstarrungsverhaltens wurde in Anlehnung an DIN EN 196-3 bestimmt. Dabei wird der Erstarrungsbeginn und das Erstarrungsende eines Zementleims mit und ohne Pigmentierung miteinander verglichen, wobei die Abweichungen nicht größer sein dürfen als in der EN 12878 vorgegeben.

## I.4 Dispergierbarkeit in Asphalt

Die Bestimmung der Dispergierbarkeit in Asphalt erfolgte nach folgendem Verfahren: Das Pigmentpulver beziehungsweise Pigmentgranulat wird in einem beheizbaren Labormischer (Rego-Mischer) zusammen mit einem Straßenbaubitumen des Typs B 80 (Handelsprodukt der Shell AG) und Zuschlagstoffen 60 Sekunden lang bei 180 °C gemischt. Mit der Mischung werden Prüfkörper nach Marshall hergestellt ("The Shell Bitumen Handbook, Shell Bitumen U.K., 1990, Seite 230-232). Farbtonunterschiede der Marshall-Körper zu einer vorgegebenen Vergleichsprobe aus Pigmentpulver werden farbmetrisch durch Vergleich der Rotwerte a* beurteilt (Minolta Chromameter II, Normlichtart C, CIELAB-System (1976), wie in ASTM E 308 (2006) und ASTM D 2244 (1993) beschrieben). Unterschiede in den a*-Werten kleiner 0,5 Einheiten sind visuell nicht unterscheidbar.

I.5 Bestimmung des Restwassergehaltes

Der Restwassergehalt (Restfeuchte) der Pigmentgranulate wird durch schonende Trocknung bis zur Gewichtskonstanz bestimmt.

## I.6 Bestimmung des Zerfalls in Wasser

Die Untersuchung, ob ein Granulat beim Kontakt mit Wasser in ausreichender Menge innerhalb kurzer Zeit ohne mechanische Einwirkung den im wesentlichen vollständigen Zerfall der Primärstruktur des Granulates unter Freisetzung des Pigmentes bewirkt, erfolgt nach einer der in der DE 103 19 483 A1 beschriebenen Methoden. Dabei wird das Granulat mit einer ausreichenden Menge Wasser im Überschuss zusammengebracht. Dies erfolgt unter dem Mikroskop, so dass der Zerfall der Granulatteilchen gut beobachtet werden kann.

## I.7 Bestimmung der mittleren Teilchengröße von anorganischen Filterhilfsmitteln

Die Bestimmung der mittleren Teilchengröße von anorganischen Filterhilfsmitteln wird mit einem Malvern MasterSizer MS-S (Firma Malvern Instruments Ltd.) gemessen. Das Gerät ist ein Laserdiffraktometer (ISO 13320-1), das nach dem Prinzip der Fraunhoferbeugung arbeitet. Für Nassmessungen kann ein Teilchengrößenbereich von 0,05 bis 879 $\mu$m erfasst werden. Für den Teilchengrößenbereich zwischen 0,05 und ca. 4 $\mu$m werden die Messwerte durch Rechnungen nach der Mie-Theorie korrigiert. Das Gerät besitzt eine integrierte Ultraschallwanne mit einem Fassungsvermögen von 915 ml mit eingesetztem Rührer. Die Förderung der Suspension durch die Messzelle erfolgt mit einer Pumpe im Umlauf mit variabler Geschwindigkeit. Für die Messung werden ca. 100 mg Probenmaterial in 50 ml 0,1 %iger Natriumhexametaphosphatlösung zwei Minuten bei 200 W Eingangsleistung mittels einer Ultraschallsonotrode (UP400S, Firma Hielscher Ultrasonics GmbH) mit einem Intervall von 1:1 dispergiert. Diese vorbereitete Suspension wird in die mit 0,1 %iger Natriumhexametaphosphatlösung gefüllte, laufende interne Ultraschallwanne des MasterSizers gegeben. Gegebenenfalls wird mit destilliertem Wasser verdünnt, bis sich die Konzentrationsanzeige des MasterSizers im idealen Bereich befindet. Für die Messung sollten folgende Parameter eingestellt werden: Pumpgeschwindigkeit 50%, Ultraschalleistung (nur während der Zugabe) 70% und Rührgeschwindigkeit 50%.

**I.8 Bestimmung der Permeablen Filterkuchendichte (PCD = Permeable Cake Density)**

2,00 g des Filterhilfsmittels werden in ein 50 ml Becherglas überführt und 35 ml destilliertes Wasser von 30 °C zugesetzt. Das Filterltilfsmittel wird im Wasser suspendiert und in eine Durchflusssäule mit 1,44 cm Innen-Durclunesser und einer Volumenskalierung in ml überführt. Die Durchflusssäule verfügt über ein Metallsieb, auf dem ein Filterpapier (Firma Schleicher&Schuell GmbH) aufgelegt wird. Die Durchflusssäule sitzt dicht auf einer Vakuumsaugflasche. Nachdem ein Teil der Filterhilfsmittel-Suspension in die Durchflusssäule überführt wurde, wird an die Vakuumsaugflasche langsam ein Druck von 680 bis 695 mbar angelegt. Das Vakuum wird in diesem Bereich konstant gehalten, beispielsweise über eine automatische Regelung. Der Rest der Filterhilfsmittel-Suspension wird nochmals aufgerührt und in die Durchflusssäule gegossen. Das Becherglas wird mit einer kleinen Menge destillierten Wassers von 30 °C ausgespült und das Spülwasser wird ebenfalls in die Durchflusssäule überführt. Dann lässt man sich den Filterkuchen ausbilden. Wenn ungefähr noch 1 ml Suspension über dem Filterkuchen steht, gibt man 30 °C warmes destilliertes Wasser zu, bis die Flüssigkeitssäule ein wenig über der 24 ml-markierung steht. Ein Trockenlaufen des Filterkuchens muss auf jeden Fall vermieden werden. Wenn der Meniskus der Flüssigkeitssäule die 16 ml-Markierung passiert, wird das Volumen des nassen Filterkuchens auf der Skala der Durchflusssäule bis auf 0,1 ml genau abgelesen. Dabei muss ein Trockenlaufen des Filterkuchens auf jeden Fall vermieden werden, er muss stets mit ausreichend Wasser bedeckt sein. Die Permeable Filterkuchendichte (PCD) kann nach der folgenden Formel einfach berechnet werden:

$$PCD = \frac{m}{v} \qquad ,$$

wobei m die Masse des eingesetzten Filterhilfsmittels in Gramm (g) ist und v das Volumen des nassen Filterkuchens in ml. Bei der Bestimmung und Berechnung der Penneablen Filterkuchendichte (PCD) bleiben gegebenenfalls auf der Flüssigkeitssäule aufschwimmende Anteile des Filterhilfsmittels ohne Beachtung. Es wird also immer nur der sich auf dem Filter ausgebildete Filterkuchen berücksichtigt. Die Permeable Filterkuchendichte (PCD) besitzt die Einheit g/ml.

**II. Beispiele**

**Beispiel 1**

Eisenoxidrot-Pigment Bayferrox® 130 (Handelsprodukt der Lanxess Deutschland GmbH) wurde mit 3,0 Gew.-% einer 40%igen Ammonium-Ligninsutfonat-Lösung und 1,5 Gew.-% Dicalite® 4208 (Perlit und Handelsprodukt der Firma Dicalite Europe NV) in einem Mischer 15 Minuten gemischt. Die Mischung wurde auf einem Kompaktierer 200/50 (Firma Bepex, Leingarten) mit circa 17 kN (3,4 kN/cm) gepresst und danach auf einem Schroter (Firma Frewitt, Fribourg, Schweiz) mit einem Sieb von 1,5 mm Maschenweite zerkleinert. Das zerkleinerte Produkt wurde über ein Sieb mit 315 $\mu$m Maschenweite abgesiebt. Das als Überkorn erhaltene Granulat ist staubfrei und gut fließfähig. Es weist einen Restwassergehalt von 0,40 Gew.-% und eine Schüttdichte von 1,06 g/cm$^3$ auf. Bei Kontakt mit einer ausreichenden Menge Wasser zerfällt das Granulat auch ohne mechanische Einwirkung schlagartig, so dass bereits nach weniger als 30 Sekunden ein vollständiger Zerfall der Primärstruktur der Granulatteilchen eingetreten ist.

Das Pigmentgranulat wurde gemäß dem beschriebenen Test in eine Asphalt-Mischung eingearbeitet, indem ein Prüfkörper nach Marshall hergestellt wird. Als Vergleichsprobe diente der Marshall-Körper, der mit dem für die Granulation eingesetzten Bayferrox® 130-Pulver eingefärbt worden war. An den beiden Prüfkörpern kann visuell kein Unterschied festgestellt werden. Der Unterschied im a*-Wert zwischen den beiden Prüfkörpern beträgt -0,1 Einheiten. Das Pigmentgranulat ist also hervorragend im Asphalt dispergierbar.

Das Pigmentgranulat wurde gemäß dem beschriebenen Baustoff-Farbtest in eine Baustoff-Mischung eingearbeitet. An dem mit Pigmentgranulat eingefärbten Prüfkörpern wird nach 55 s Dispergierdauer eine relative Farbstärke von 96% bei einem Farbabstand $\Delta E_{ab}$* von 1,1 Einheiten gemessen, nach 70 s Dispergierdauer sind es 101% relative Farbstärke bei einem Farbabstand von $\Delta E_{ab}$* von 0,8 Einheiten. Das Pigmentgranulat ist also nach 70 s voll ausdispergiert. An den Prüfkörpern, die mit dem für die Granulation eingesetzten Bayferrox® 130-Pulver eingefärbten worden waren, wird nach 55 s Dispergierdauer eine relative Farbstärke von 98% gemessen, und nach 70 s Dispergierdauer von 100% (Bezugsprobe für die gesamte Messserie). Das Pigmentgranulat ist also hervorragend im Baustoff dispergierbar. Seine Färbewirkung ist mit der des für die Granulation eingesetzten Bayferrox® 130-Pulvers vergleichbar. Überraschenderweise sind die Farbwerte beim filterhilfsmittelhaltigen Granulat sogar gesättigter.

**Beispiel 2**

Eisenoxidrot-Pigment Bayferrox® 130 wurde mit 1,5 Gew.-% Polyethylenglykol (mittleres Molekulargewicht circa 400) und 2,0 Gew.-% Dicalite® 478 (Perlit und Handelsprodukt der Firma Dicalite Europe NV) in einem Mischer 15 Minuten gemischt. Die Mischung wurde auf einem Kompaktierer 200/50 (Firma Bepex, Leingarten) mit circa 17 kN (3,4 kN/cm) gepresst und danach auf einem Schroter (Firma Frewitt, Fribourg, Schweiz) mit einem Sieb von 1,5 mm Maschenweite zerkleinert. Das zerkleinerte Produkt wurde über ein Sieb mit 315 $\mu$m Maschenweite abgesiebt. Das als Überkorn erhaltene Granulat ist staubfrei und gut fließfähig. Es weist einen Restwassergehalt von 0,73 Gew.-% und eine Schüttdichte von 1,07 g/cm$^3$ auf. Bei Kontakt mit einer ausreichenden Menge Wasser zerfällt das Granulat auch ohne mechanische Einwirkung schlagartig, so dass bereits nach weniger als 30 Sekunden ein vollständiger Zerfall der Primärstruktur der Granulatteilchen eingetreten ist. Der beschriebene rasche Zerfall des Granulates bei Kontakt mit einer ausreichenden Menge Wasser tritt auch noch nach Monaten ein. Ein Alterungseffekt ist also nicht festzustellen.
Der Vergleich der Druckfestigkeit einer Probe aus pigmentiertem Zementmörtel im Vergleich zu einer unpigmentierten Probe ergibt eine Abweichung von -4%. Damit erfüllt das Granulat die Anforderungen der EN 12878. Dies gilt auch für das Erstarrungsverhalten. Gegenüber einem Zementleim ohne Pigment ist kein Unterschied festzustellen.

**Beispiel 3**

Die in Beispiel 2 beschriebene Mischung wurde auf einem Kompaktierer 200/50 mit circa 24 kN (4,8 kN/cm) gepresst und danach auf einem Schroter mit einem Sieb von 1,5 mm Maschenweite zerkleinert. Das zerkleinerte Produkt wurde über ein Sieb mit 315 $\mu$m Maschenweite abgesiebt. Das als Überkorn erhaltene Granulat ist staubfrei und gut fließfähig. Es weist einen Restwassergehalt von 0,51 Gew.-% und eine Schüttdichte von 1,08 g/cm$^3$ auf. Bei Kontakt mit einer ausreichenden Menge Wasser zerfällt das Granulat auch ohne mechanische Einwirkung schlagartig, so dass bereits nach weniger als 30 Sekunden ein vollständiger Zerfall der Primärstruktur der Granulatteilchen eingetreten ist. Der beschriebene rasche Zerfall des Granulates bei Kontakt mit einer ausreichenden Menge Wasser tritt auch noch nach Monaten ein. Ein Alterungseffekt ist also nicht festzustellen.
Der Vergleich der Druckfestigkeit einer Probe aus pigmentiertem Zementmörtel im Vergleich zu einer unpigmentierten Probe ergibt eine Abweichung von -1%. Damit erfüllt das Granulat die Anforderungen der EN 12878. Dies gilt auch für das Erstarrungsverhalten. Gegenüber einem Zementleim ohne Pigment ist nur ein Unterschied von 5 Minuten festzustellen.

**Beispiel 4**

Ein Eisenoxidschwarz-Pigment, hergestellt nach dem Fällungsverfahren aus Eisen(II)-sulfat wurde nach der Synthese filtriert und salzfrei gewaschen. Der Filterkuchen wurde wieder mit Wasser angemaischt und enthielt schließlich 2,0 Gew.-% Dicalite® 4208. Es wurden zusätzlich 3,0 Gew.-% einer 40%igen Ammonium-Ligninsulfonat-Lösung zugesetzt. Die Suspension mit 52% Feststoffgehalt wurde über einen Düsensprühtrockner getrocknet. Das erhaltene Granulat ist staubfrei und gut fließfähig. Es wies einen Restwassergehalt von 0,34 Gew.-% und eine Schüttdichte von 1,20 g/cm$^3$ auf. Für Vergleichszwecke wurde auch eine Probe ohne irgendwelche Zusätze über den Düsensprühtrockner getrocknet. Das erhaltene Vergleichsmaterial ist wesentlich schlechter fließfähig und neigt stärker zum Stauben. Ohne Anwesenheit eines Hilfsmittels ist das Vergleichsmaterial nicht ausreichend stabil für ein Granulat.
Das Pigmentgranulat wurde gemäß dem beschriebenen Baustoff-Farbtest in eine Baustoff-Mischung eingearbeitet. An den mit filterhilfsmittelhaltigem Pigmentgranulat eingefärbten Prüfkörpern wird nach 40 s Dispergierdauer eine relative Farbstärke von 94% bei einem Farbabstand $\Delta E_{ab}^*$ von 0,7 Einheiten gemessen, nach 55 s Dispergierdauer sind es 99% relative Farbstärke bei einem Farbabstand $\Delta E_{ab}^*$ von 0,2 Einheiten. Das Pigmentgranulat ist also nach 55 s voll ausdispergiert. An den Prüfkörpern, die mit dem Vergleichsmaterial eingefärbten worden waren, wird nach 40 s Dispergierdauer eine relative Farbstärke von 92% gemessen, und nach 55 s Dispergierdauer von 98% (Bezugsprobe für die gesamte Messserie ist die Vergleichsprobe mit einer Dispergierdauer von 70 s). Das filterhilfsmittelhaltige Pigmentgranulat ist also hervorragend im Baustoff dispergierbar.

**Beispiel 5**

Ein Eisenoxidschwarz-Pigment, hergestellt nach dem Fällungsverfahren aus Eisen(II)-sulfat wurde nach der Synthese filtriert und salzfrei gewaschen. Der Filterkuchen wurde wieder mit Wasser angemaischt und enthielt schließlich 2,0 Gew.-% Dicalite® 4208. Er wurde über einen Sprühtrockner getrocknet. Das erhaltene Material wurde über eine Bauermeistermühle mit 3 mm-Siebeinsatz gemahlen und das filterhilfsmittelhaltige Pulver wurde auf einem Kompaktierer 200/50 mit circa 9 kN (1,8 kN/cm) gepresst und danach auf einem Schroter mit einem Sieb von 1,5 mm Maschenweite zerkleinert. Das zerkleinerte Produkt wurde über ein Sieb mit 315 $\mu$m Maschenweite abgesiebt. Das als Überkorn erhaltene Granulat ist staubfrei und gut fließfähig. Es weist einen Restwassergehalt von 2,5 Gew.-% und eine Schüttdichte von 1,18 g/cm$^3$ auf. Bei Kontakt mit einer ausreichenden Menge Wasser zerfällt das Granulat auch ohne mechanische Einwirkung in weniger als 30 Sekunden unter vollständigem Zerfall der Primärstruktur der Granulatteilchen.

Das Pigmentgranulat wurde gemäß dem beschriebenen Baustoff-Farbtest in eine Baustoff-Mischung eingearbeitet. An den mit filterhilfsmittelhaltigem Pigmentgranulat eingefärbten Prüfkörpern wird nach 40 s Dispergierdauer eine relative Farbstärke von 85% bei einem Farbabstand $\Delta E_{ab}{}^*$ von 1,8 Einheiten gemessen, nach 55 s Dispergierdauer sind es 101% relative Farbstärke bei einem Farbabstand $\Delta E_{ab}{}^*$ von 0,2 Einheiten. Bezugsprobe für die gesamte Messserie ist die Vergleichsprobe nach einer Dispergierdauer von 70 s. Die Vergleichsprobe ist das Dicalite®-freie eingesetzte Eisenoxidschwarz-Pigment nach Filtration, Waschung, Trocknung und Mahlung. Das filterhilfsmittelhaltige Pigmentgranulat ist also hervorragend im Baustoff dispergierbar.

### Beispiel 6 (Vergleichsbeispiel zu Beispiel 7)

Eisenoxidgelb-Pigment Bayferrox® 920 wurde mit 2,5 Gew.-% Arbocel® FT 600-30 (Zerfalls-Hilfsmittel auf Cellulosebasis, Handelsprodukt der Firma J. Rettenmaier & Söhne GmbH + Co, gemäß DE 103 19 483 A1) in einem Mischer 15 Minuten gemischt. Die Mischung wurde auf einem Kompaktierer 200/50 mit circa 16 kN (3,2 kN/cm) gepresst und danach auf einem Schroter mit einem Sieb von 1,5 mm Maschenweite zerkleinert. Das zerkleinerte Produkt wurde über ein Sieb mit 315 $\mu$m Maschenweite abgesiebt. Das als Überkorn erhaltene Granulat ist staubfrei und gut fließfähig. Es weist einen Restwassergehalt von 0,89 Gew.-% und eine Schüttdichte von 0,73 g/cm$^3$ auf. Bei Kontakt mit einer ausreichenden Menge Wasser zerfällt das Granulat auch ohne mechanische Einwirkung in weniger als 30 Sekunden wie die Granulate in der DE 103 19 483 A1. In weniger als 30 Sekunden ist ein vollständiger Zerfall der Primärstruktur der Granulatteilchen eingetreten.

Das Pigmentgranulat wurde gemäß dem beschriebenen Baustoff-Farbtest in eine Baustoff-Mischung eingearbeitet. Die Entwicklung der relativen Farbstärke nach 40, 55, 70, 86 und 100 s sowie die jeweils zugehörigen Farbabstände $\Delta E_{ab}{}^*$ sind in Tabelle 1 zusammengefasst.

### Beispiel 7

Eisenoxidgelb-Pigment Bayferrox® 920 wurde mit 2,5 Gew.-% einer 40%igen Ammonium-Ligninsulfonat-Lösung und 1,0 Gew.-% Dicalite® 4208 in einem Mischer 15 Minuten gemischt. Die Mischung wurde auf einem Kompaktierer 200/50 mit circa 16 kN (3,2 kN/cm) gepresst und danach auf einem Schroter mit einem Sieb von 1,5 mm Maschenweite zerkleinert. Das zerkleinerte Produkt wurde über ein Sieb mit 315 $\mu$m Maschenweite abgesiebt. Das als Überkorn erhaltene Granulat ist staubfrei und gut fließfähig. Es weist einen Restwassergehalt von 0,91 Gew.-% und eine Schüttdichte von 0,76 g/cm$^3$ auf. Bei Kontakt mit einer ausreichenden Menge Wasser zerfällt das Granulat auch ohne mechanische Einwirkung schlagartig, so dass bereits nach weniger als 30 Sekunden ein vollständiger Zerfall der Primärstruktur der Granulatteilchen eingetreten ist.

Das Pigmentgranulat wurde gemäß dem beschriebenen Baustoff-Farbtest in eine Baustoff-Mischung eingearbeitet. Die Entwicklung der relativen Farbstärke nach 40, 55, 70, 86 und 100 s sowie die jeweils zugehörigen Farbabstände $\Delta E_{ab}{}^*$ sind in Tabelle 1 zusammengefasst. Es ist ersichtlich, dass das filterhilfsmittelhaltige Pigmentgranulat sehr gut dispergierbar ist, da nach nur 70 s eine relative Farbstärke von 96% erreicht wird. Die Dispergierbarkeit ist mindestens so gut wie die der im Stand der Technik beschriebenen Granulate (Beispiel 6).

Tabelle 1: Farbstärken und jeweils zugehörige Farbabstände $\Delta E_{ab}{}^*$ in Abhängigkeit der Dispergierdauer für die Beispiele 6 und 7.

| Dispergierdauer | Beispiel 7 | | Beispiel 6 (Vergleichsbeispiel) | |
|---|---|---|---|---|
| | Relative Farbstärke | Farbabstand $\Delta E_{ab}{}^*$ | Relative Farbstärke | Farbabstand $\Delta E_{ab}{}^*$ |
| 40 s | 87% | 1,9 | 83% | 2,7 |
| 55 s | 90% | 1,1 | 91% | 1,2 |
| 70 s | 96% | 0,4 | 93% | 0,7 |
| 85 s | 100% | 0,2 | 96% | 0,4 |
| 100 s | 100% (Bezug) | 0,0 (Bezug) | 98% | 0,3 |

**Patentansprüche**

1. Pigmentgranulat, enthaltend ein oder mehrere anorganische und/oder organische Pigmente und mindestens ein anorganisches Filterhilfsmittel, **dadurch gekennzeichnet, dass** das anorganische Filterhitfsmittel aus Kieselgel und/oder Perlit ausgewählt ist.

2. Pigmentgranulat gemäß Anspruch 1, **dadurch gekennzeichnet, dass** als anorganische Pigmente Eisenoxid-, Titandioxid-, Chromoxid-, Zinkoxid-, Manganoxid-, Rutilmischphasenpigmente und Ruß (Kohlenstoffpigmente) oder Mischungen davon eingesetzt werden.

3. Pigmentgranulat gemäß Anspruch 1, **dadurch gekennzeichnet, dass** als organische Pigmente Azo-, Chinacridon-, Phthalocyanin- und Perylen-Pigmente und Indigoide oder Mischungen davon eingesetzt werden.

4. Pigmentgranulat gemäß einem oder mehreren der Ansprüche 1 bis 3, **dadurch gekennzeichnet, dass** das Pigmentgranulat ein oder mehrere anorganische filterhilfsmittel mit einem $D_5$-Wert von unter 80 $\mu$m, insbesondere von unter 40 $\mu$m, gemäß der offenbarten Messmethode enthält.

5. Pigmentgranulat gemäß einem oder mehreren der Ansprüche 1 bis 4, **dadurch gekennzeichnet, dass** das Pigmentgranulat beim Kontakt mit einem deutlichem Überschuss Wasser innerhalb von weniger als einer Minute, insbesondere innerhalb von weniger als 30 Sekunden, ohne mechanische Einwirkung zerfällt, wobei im wesentlichen der vollständige Zerfall der Primärstruktur der Granulatteilchen unter Freisetzung des Pigmentes eintritt.

6. Pigmentgranulat gemäß einem oder mehreren der Ansprüche 1 bis 5, **dadurch gekennzeichnet, dass** das Pigmentgranulat ein oder mehrere anorganische Filterhilfsmittel in einer Gesamtmenge von 0,01 bis 10 Gew.-%, insbesondere von 0,1 bis 7,5 Gew.%, bezogen auf die Gesamtmenge des Pigmentgranulates enthält.

7. Pigmentgranulat gemäß einem oder mehreren der Ansprüche 1 bis 6, **dadurch gekennzeichnet, dass** das Pigmentgranulat Füllstoffe in einer Gesamtmenge von maximal 40 Gew.-%, insbesondere von maximal 10 Gew.-%, bezogen auf das Pigmentgranulat enthält.

8. Pigmentgranulat gemäß einem oder mehreren der Ansprüche 1 bis 7, **dadurch gekennzeichnet, dass** mindestens 85 % des Pigmentgranulates eine Teilchengröße im Bereich von 60 bis 3000 $\mu$m, insbesondere im Bereich von 80 bis 1500 $\mu$m, aufweist.

9. Pigmentgranulat gemäß einem oder mehreren der Ansprüche 1 bis 8, **dadurch gekennzeichnet, dass** das Pigmentgranulat als Perlgranulat vorliegt.

10. Pigmentgranulat gemäß einem oder mehreren der Ansprüche 1 bis 8, **dadurch gekennzeichnet, dass** das Pigmentgranulat als Press- oder Brikettiergranulat vorliegt.

11. Pigmentgranulat gemäß einem oder mehreren der Ansprüche 1 bis 10, **dadurch gekennzeichnet, dass** das Pigmentgranulat einen Restwassergehalt von unter 5 Gew.-%, insbesondere von unter 4 Gew.-%, aufweist.

12. Verfahren zur Herstellung eines Pigmentgranulates gemäß einem oder mehreren der Ansprüche 1 bis 11, **dadurch gekennzeichnet, dass** ein oder mehrere anorganische und/oder organische Pigmente mit mindestens einem anorganischen Filterhilfsmittel auf Basis von hieselgel und/oder Perlit sowie gegebenenfalls weiteren Hilfsmitteln und/oder Füllstoffen gemischt werden und die Mischung einem Granulationsprozess unterworfen wird.

13. Verfahren zur Herstellung eines Pigmentgranulates gemäß Anspruch 12, **dadurch gekennzeichnet, dass** das Mischen des anorganischen Filterhilfsmittels mit einem oder mehreren anorganischen oder organischen Pigmenten in der Nassphase erfolgt.

14. Verfahren zur Herstellung eines Pigmentgranulates gemäß Anspruch 13 **dadurch gekennzeichnet, dass** das Mischen des anorganischen Filterhilfsmittels mit einem oder mehreren anorganischen oder organischen Pigmenten in trockener Phase erfolgt.

15. Verwendung des Pigmentgranulates gemäß einem oder mehreren der Ansprüche 1 bis 11 zur Einfärbung von kalk- und/oder zementgebundenen Baustoffen, zum Einfärben von Asphalt und Papier und zur Einfärbung von organischen Medien, und zur Herstellung von Dispersionsfarben und Slurries

**Claims**

1. Pigment granules containing one or more inorganic and/or organic pigments and at least one inorganic filter aid, **characterized in that** the inorganic filter aid is selected from silica gel and/or perlite.

2. Pigment granules according to Claim 1, **characterized in that** iron oxide, titanium dioxide, chromium oxide, zinc oxide, manganese oxide and rutile mixed-phase pigments and carbon black (carbon pigments) or mixtures thereof are used as inorganic pigments.

3. Pigment granules according to Claim 1, **characterized in that** azo, quinacridone, phthalocyanine and perylene pigments and indigoids or mixtures thereof are used as organic pigments.

4. Pigment granules according to one or more of Claims 1 to 3, **characterized in that** the pigment granules contain one or more inorganic filter aids having a $D_{50}$ value of less than 80 $\mu$m, in particular of less than 40 $\mu$m, according to the disclosed method of measurement.

5. Pigment granules according to one or more of Claims 1 to 4, **characterized in that** the pigment granules disintegrate on contact with a significant excess of water within less than 1 minute, in particular within less than 30 seconds, without mechanical action, with occurrence of essentially complete disintegration of the primary structure of the granule particles to release the pigment.

6. Pigment granules according to one or more of Claims 1 to 5, **characterized in that** the pigment granules contain one or more inorganic filter aids in a total amount of 0.01 to 10% by weight, in particular of 0.1 to 7.5% by weight, based on the total amount of pigment granules.

7. Pigment granules according to one or more of Claims 1 to 6, **characterized in that** the pigment granules contain fillers in a total amount of not more than 40% by weight, in particular of not more than 10% by weight, based on the pigment granules.

8. Pigment granules according to one or more of Claims 1 to 7, **characterized in that** at least 85% of the pigment granules have a particle size in the range from 60 to 3000 $\mu$m, in particular in the range from 80 to 1500 $\mu$m.

9. Pigment granules according to one or more of Claims 1 to 8, **characterized in that** the pigment granules are present as bead granules.

10. Pigment granules according to one or more of Claims 1 to 8, **characterized in that** the pigment granules are present as compressed or briquetted granules.

11. Pigment granules according to one or more of Claims 1 to 10, **characterized in that** the pigment granules have a residual water content of less than 5% by weight, in particular of less than 4% by weight.

12. Process for the production of pigment granules according to one or more of Claims 1 to 11, **characterized in that** one or more inorganic and/or organic pigments are mixed with at least one inorganic filter aid based on silica gel and/or perlite and optionally further auxiliaries and/or fillers and the mixture is subjected to a granulation process.

13. Process for the production of pigment granules according to Claim 12, **characterized in that** the mixing of the inorganic filter aid with one or more inorganic or organic pigments is effected in the wet phase.

14. Process for the production of pigment granules according to Claim 13, **characterized in that** the mixing of the inorganic filter aid with one or more inorganic or organic pigments is effected in the dry phase.

15. Use of the pigment granules according to one or more of Claims 1 to 11 for colouring lime- and/or cement-bound building materials, for colouring asphalt and paper and for colouring organic media, and for the production of emulsion paints and slurries.

**Revendications**

1. Granulat de pigment(s), contenant un ou plusieurs pigments inorganiques et/ou organiques et au moins un adjuvant inorganique de filtration, **caractérisé en ce que** l'adjuvant inorganique de filtration est choisi parmi le gel silicique et/ou la perlite.

2. Granulat de pigment(s) selon la revendication 1, **caractérisé en ce qu'**on utilise, comme pigments inorganiques, des pigments de type oxyde de fer, dioxyde de titane, oxyde de chrome, oxyde de zinc, oxyde de manganèse, des pigments de phases mixtes de rutile et de la suie (pigments carbonés) ou leurs mélanges.

3. Granulat de pigment(s) selon la revendication 1, **caractérisé en ce qu'**on utilise, comme pigments organiques, des pigments de type azo, quinacridone, phtalocyanine et pérylène et des indigoïdes ou leurs mélanges.

4. Granulat de pigment(s) selon l'une ou plusieurs des revendications 1 à 3, **caractérisé en ce que** le granulat de pigment(s) contient un ou plusieurs adjuvants inorganiques de filtration présentant une valeur $D_{50}$ inférieure à 80 $\mu$m, en particulier inférieure à 40 $\mu$m, selon le procédé de mesure divulgué.

5. Granulat de pigment(s) selon l'une ou plusieurs des revendications 1 à 4, **caractérisé en ce que** le granulat de pigment(s) se décompose lors d'un contact avec un excès net d'eau en moins d'une minute, en particulier en moins de 30 secondes, sans effet mécanique, sensiblement la décomposition totale de la structure primaire des particules de granulat se produisant avec libération du pigment.

6. Granulat de pigment(s) selon l'une ou plusieurs des revendications 1 à 5, **caractérisé en ce que** le granulat de pigment(s) contient un ou plusieurs adjuvants inorganiques de filtration en une quantité totale de 0,01 à 10% en poids, en particulier de 0,1 à 7,5% en poids, par rapport à la quantité totale du granulat de pigment(s).

7. Granulat de pigment(s) selon l'une ou plusieurs des revendications 1 à 6, **caractérisé en ce que** le granulat de pigment(s) contient des charges en une quantité totale d'au maximum 40% en poids, en particulier d'au maximum 10% en poids, par rapport au granulat de pigment(s).

8. Granulat de pigment(s) selon l'une ou plusieurs des revendications 1 à 7, **caractérisé en ce qu'**au moins 85% du granulat de pigment(s) présente une grosseur de particule dans la plage de 60 à 3000 $\mu$m, en particulier dans la plage de 80 à 1500 $\mu$m.

9. Granulat de pigment(s) selon l'une ou plusieurs des revendications 1 à 8, **caractérisé en ce que** le granulat de pigment(s) se trouve sous forme de granulat en perles.

10. Granulat de pigment(s) selon l'une ou plusieurs des revendications 1 à 8, **caractérisé en ce que** le granulat de pigment(s) se trouve sous forme de granulat en comprimés ou en briquettes.

11. Granulat de pigment(s) selon l'une ou plusieurs des revendications 1 à 10, **caractérisé en ce que** le granulat de pigment(s) présente une teneur résiduelle en eau inférieure à 5% en poids, en particulier inférieure à 4% en poids.

12. Procédé pour la préparation d'un granulat de pigment(s) selon l'une ou plusieurs des revendications 1 à 11, **caractérisé en ce qu'**on mélange un ou plusieurs pigments inorganiques et/ou organiques avec au moins un adjuvant inorganique de filtration à base de gel silicique et/ou de perlite ainsi que le cas échéant d'autres adjuvants et/ou charges et le mélange est soumis à un procédé de granulation.

13. Procédé pour la préparation d'un granulat de pigment(s) selon la revendication 12, **caractérisé en ce que** le mélange de l'adjuvant inorganique de filtration avec un ou plusieurs pigments inorganiques ou organiques a lieu en phase humide.

14. Procédé pour la préparation d'un granulat de pigment(s) selon la revendication 13, **caractérisé en ce que** le mélange de l'adjuvant inorganique de filtration avec un ou plusieurs pigments inorganiques ou organiques a lieu en phase sèche.

15. Utilisation du granulat de pigment(s) selon l'une ou plusieurs des revendications 1 à 11 pour colorer des matériaux de construction liés à la chaux et/ou au ciment, pour la coloration d'asphalte et de papier et pour la coloration d'agents organiques ainsi que pour la préparation d'encres en dispersion et de suspensions.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3619363 A1
- DE 4119667 A1
- EP 0507046 A1
- DE 19638042 A1
- DE 19649756 A1
- DE 4336613 A1
- DE 4336612 A1
- DE 19704943 A1
- WO 2008012245 A2

- WO 0155264 A2
- DE 10003248 A1
- DE 3918694 A1
- US 6596072 B1
- DE 10319483 A1
- DE 19731698 A1
- DE 10002559 B4
- DE 10066190 B4

**In der Beschreibung aufgeführte Nicht-Patentliteratur**

- The Shell Bitumen Handbook. Shell Bitumen, 1990, 230-232